(19) **Europäisches Patentamt / European Patent Office / Office européen des brevets**

(11) **EP 1 947 718 A1**

(12) **EUROPEAN PATENT APPLICATION**
published in accordance with Art. 158(3) EPC

(43) Date of publication:
**23.07.2008 Bulletin 2008/30**

(21) Application number: **06821817.1**

(22) Date of filing: **05.10.2006**

(51) Int Cl.:
*H01M 4/90* (2006.01)    *B01J 23/89* (2006.01)
*B01J 37/02* (2006.01)    *B01J 37/16* (2006.01)
*C22C 5/04* (2006.01)    *C22C 19/07* (2006.01)
*H01M 4/88* (2006.01)

(86) International application number:
**PCT/JP2006/319982**

(87) International publication number:
**WO 2007/043441 (19.04.2007 Gazette 2007/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.10.2005 GB 0520471**
**06.03.2006 GB 0604358**
**30.06.2006 JP 2006181480**

(71) Applicant: **Asahi Kasei Kabushiki Kaisha**
**Osaka-shi**
**Osaka 530-8205 (JP)**

(72) Inventors:
• **MORIMOTO, Isao**
**Tokyo 1008440 (JP)**
• **OKADA, Nobuhiro**
**Tokyo 1008440 (JP)**
• **YAMAGUCHI, Fujito**
**Tokyo 1008440 (JP)**
• **BRACE, Karen Marie**
**Tokyo 1008440 (JP)**
• **LEE, Christopher Edward**
**Tokyo 1008440 (JP)**
• **HAYDEN, Brian Elliot**
**Tokyo 1008440 (JP)**

(74) Representative: **Weber, Thomas et al**
**Patentanwälte**
**von Kreisler-Selting-Werner,**
**Postfach 10 22 41**
**50462 Köln (DE)**

(54) **ALLOY CATALYST FOR FUEL CELL CATHODE**

(57) An alloy catalyst for oxygen reduction reaction in a polymer electrolyte membrane fuel cell, comprising at least Pd, Co, and Au, wherein each content of Pd, Co, and Au satisfies 20 atomic % $\leq$ Pd < 70 atomic %, 30 atomic % $\leq$ Co < 70 atomic %, and 0 atomic % < Au $\leq$ 30 atomic %.

FIG.10

EP 1 947 718 A1

**Description**

TECHNICAL FIELD

The present invention relates to an alloy catalyst for the cathode of a polymer electrolyte membrane fuel cell and a method for manufacturing the same.

BACKGROUND ART

A fuel cell is a device, in which hydrogen, ethanol, or the like is electrochemically reacted to directly obtain electric energy, and is recently paid attention to as a high-efficient and low-polluting electric generating system.
This fuel cell is classified into several types according to difference in the used electrolyte and the like, and includes a molten carbonate type (MCFC), a phosphoric acid type (PAFC), a solid oxide type (SOFC), and a polymer electrolyte type (PEFC). Among these, PEFC can be driven at low temperature compared with other systems and has advantages such as small size, light weight, and convenience. For that reason, the practical uses for stationary cogeneration systems for automobile-and home-uses, and for small-size power sources for electronic terminal equipment such as cellular phones and notebook PCs, and the like are under review.
Fuel sources used in PEFCs are various and include hydrogen, alcohol and soon. A direct methanol PEFC that uses methanol which is at relatively low cost and is easily handled is called DMFC, can easily achieve small size and light weight, and is paid attention to as a power source for portable equipment such as cellular phones and notebook PCs.
In the cathode (air electrode) of these PEFCs, the following oxygen reduction reaction (ORR) occurs. cathode (air electrode) : $O_2 + 4H^+ + 4e^- \rightarrow 2H_2O$
A catalyst in which platinum (Pt) is supported on carbon particles is practically used as a catalyst used in this reaction. However, the cost of platinum is high and the reserves thereof are low, so that there is a fatal problem that an amount of platinum enough to make fuel cell cars prevail on a global scale does not exist on earth, for example.
In order to solve the above problem, the interest is attracted to finding non-platinum catalysts having an activity comparable to or higher than that of platinum, and the developments thereof are done actively. Among precious metal catalysts other than Pt, palladium (Pd) has high ORR activity and is available at lower cost. In the circumstances Pd and Pd alloys have been proposed as alternatives to platinum. Particularly, it is indicated that palladium-cobalt alloys exhibit high ORR activity (O. Savadogo et al.: Electrochemistry Communications 6, 2004, p 105-p 109) (J. L. Fernandez et al.: Journal of American Chemical Society 127, 2005, p 357-365) (J. L. Fernandez et al.: Journal of American Chemical Society 127, 2005, p 13100-p 13101).
However, according to the subsequent review by the present inventors, it has been found that since the well-known Pd-Co alloys provide high initial performance but cause a decrease in performance over time, the improvements in durability are necessary.
Non-patent Document 1: O. Savadogo et al.: Electrochemistry Communications 6, 2004, p 105-p 109
Non-patent Document 2: J. L. Fernandez et al.: Journal of American Chemical Society 127, 2005, p 357-365
Non-patent Document 3: J. L. Fernandez et al.: Journal of American Chemical Society 127, 2005, p 13100-p 13101

DISCLOSURE OF THE INVENTION

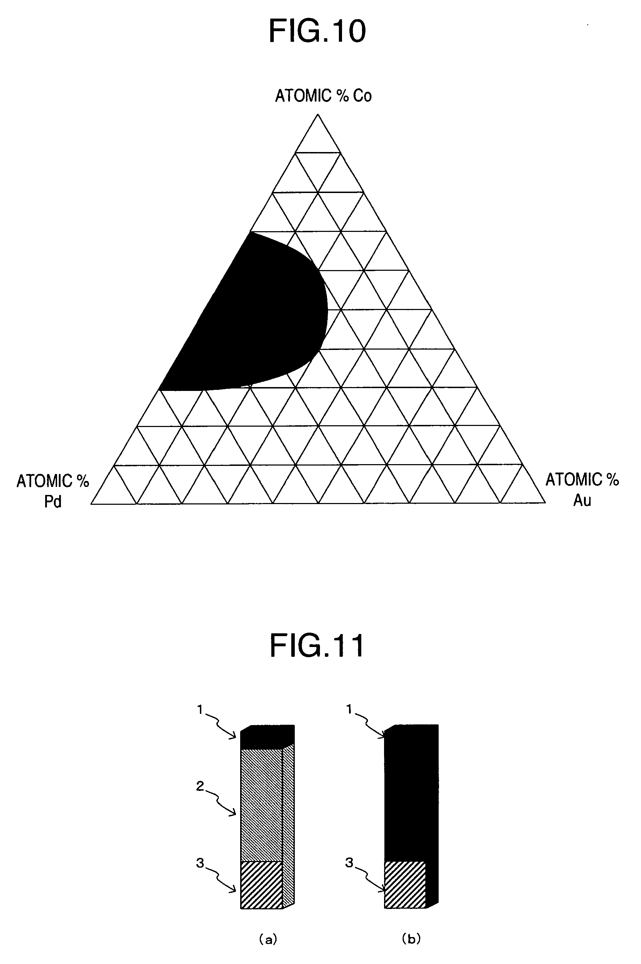

The present invention is made in view of the above described prior arts, and a main object of the present invention is to provide a Pd based alloy catalyst that can be used as a cathode for a polymer electrolyte fuel cell having excellent performance in both of ORR activity and durability, and a method for manufacturing the same.
The present invention provides an alloy catalyst for oxygen reduction reaction in a polymer electrolyte fuel cell, comprising at least Pd, Co, and Au, the composition ratios of the three elements being 20 atomic % $\leqq$ Pd < 70 atomic %, 30 atomic % $\leqq$ Co < 70 atomic %, and 0 atomic % < Au $\leqq$ 30 atomic %, respectively.
In the alloy of the present invention, Co is an activated metal for increasing activity compared with the case of Pd alone, and Au is a metal for improving mainly the stability of the alloy for use in the fuel cells.
Most suitably, one objection of the present invention is to provide an alloy catalyst in which the amounts of Pd, Co, and Au are on a border curve shown in Fig. 10 or within an area surrounded by the border curve and the Pd-Co axis.
In another aspect, one objection of the present invention is to provide a cathode for a fuel cell, comprising a support material and the alloy catalyst of the present invention.
In another aspect, one objection of the present invention is to provide a membrane/electrode assembly for a fuel cell, comprising three of a proton electrolyte membrane, an anode, and a cathode comprising the alloy catalyst of the present invention.

The present invention also provides a fuel cell comprising at least one membrane/electrode assembly comprising a proton electrolyte membrane, an anode, and a cathode comprising the alloy catalyst of the present invention.

Further, the present invention provides the following two methods as a method for manufacturing a catalyst which supports an alloy catalyst containing at least Pd, Co, and Au on a carbon powder support.

A first manufacturing method comprises the following steps. In other words, it comprises step (1) of manufacturing a support material of Pd which supports Pd on a carbon powder, wherein the support material of Pd is obtained by dispersing the carbon powder in a Pd solution and then dripping a reducing agent; step (2) of manufacturing the support material of PdCo alloy wherein the PdCo alloy is supported on the carbon powder by performing a first firing under an inert gas atmosphere containing a hydrogen gas or a hydrogen gas, and successively performing a second firing under an inert gas atmosphere, wherein the first and second firings are performed using either a support material of PdCo which is obtained by dispersing the support material of Pd in Co solution and then removing a solvent, or a support material of PdCo which is obtained by dispersing the support material of Pd in the Co solution, dripping a reducing agent or pH adjuster, and performing filtration; and step (3) of so as to manufacture the support material of PdCoAu alloy wherein the PdCoAu alloy is supported on the carbon powder by performing a third firing under an inert gas atmosphere, wherein the third firing is performed using either a support material of PdCoAu obtained by dispersing the support material of PdCo alloy in Au solution and then removing a solvent or support material of PdCoAu obtained by dispersing the support material of PdCo alloy in Au solution, dripping a reducing agent, and performing filtration.

A second manufacturing method provides the method for manufacturing a support material of PdCoAu alloy wherein the PdCoAu alloy is supported on a carbon powder by mixing and reacting a reversed micelle solution (A) with a reversed micelle solution (B), wherein the reversed micelle solution (A) comprises at least the Pd aqueous solution, the Co aqueous solution, and the Au aqueous solution within micelles, the reversed micelle solution (B) comprises at least a reducing agent, and necessary, a pH adjuster, within micelles, then supporting the reactant on a carbon powder, and then performing firing, **characterized by** that the additive amount of the reducing agent is 10 equivalents to 150 equivalents with respect to all metal ions within the micelles of (A), and that the additive amount of the pH adjuster is adjusted such that the pH within the micelles after mixing the reversed micelle solutions (A) and (B) is 9 to 13.

When a PdCoAu alloy catalyst having the composition range specified in the present invention is used as a cathode catalyst for a polymer electrolyte fuel cell, the low cost is realized, the problem of the restriction of the amounts of the underground resources can be overcome, and thereby providing the oxygen reduction performance and the excellent performance in durability.

Also, according to the manufacturing method specified in the present invention, the fine particles of alloy can be supported on the support material of a carbon powder with the high dispersion, and the catalyst for a fuel cell suitable for the practical use can be provided.

BRIEF DESCRIPTION OF THE DRAWINGS

[0009]   [0066]

Fig. 1 shows charts showing a plot of oxygen reduction current in steady state at potentials of (1a) 0.70 V and (1b) 0.80 V (vs SHE) in 0.50 M $HClO_4$ (aq) for PdCo binary systems, based on the data of Reference Example 1;

Fig. 2(a) is a chart plotting the data of the electrochemical surface area for PdCo binary systems that is estimated from the amount of charge required for CO oxidation. Fig. 2(b) is a chart plotting the data of specific activity current density in oxygen reduction at 0.70 V (vs SHE) in 0.50 M $HClO_4$ (aq), based on the data of Reference Example 2;

Fig. 3 shows a chart showing a change in surface oxide reduction peak current ($\Delta Ip/\mu A$) for PdCo binary systems that is observed from cyclic voltammograms measured before and after oxygen reduction screening experiment in 0.50 M $HClO_4$ (aq), based on the data of Reference Example 3;

Fig. 4 shows a chart showing all the compositions of the binary systems and ternary systems of vapor deposited films used in the screening experiment;

Fig. 5 are charts plotting oxygen reduction current in steady state at potentials of (a) 0.70 V, (b) 0.75 V, and (c) 0.80 V (vs SHE) in 0.5 M $HClO_4$ (aq) for PdCoAu ternary alloys in Example 1;

Fig. 6 are charts plotting specific activity current density with respect to oxygen reduction in steady state at potentials of (5a) 0.70 V, (5b) 0.75 V, and (5c) 0.80 V (vs SHE) in 0.5 M $HClO_4$ (aq) for PdCoAu ternary alloys in Example 2;

Fig. 7 are charts plotting oxygen reduction current in steady state at potentials of (a) 0.70 V, (b) 0.75 V, and (c) 0.80 V (vs SHE) in 0.5 M $HClO_4$ (aq) for the entire binary system and ternary system phase space in Example 3;

Fig. 8 are charts plotting specific activity current density with respect to oxygen reduction in steady state at potentials of (a) 0.70 V, (b) 0.75, and (c) 0.80 V (vs SHE) in 0.5 M $HClO_4$ (aq) for the entire binary system and ternary system phase space in Example 4;

Fig. 9 are charts plotting a change in surface oxide reduction peak current that is obtained from cyclic voltammograms measured before oxygen reduction screening (9a) and after the oxygen reduction screening (9b) in 0.5 M $HClO_4$

(aq) in Example 5;

Fig. 10 is a chart showing a preferable composition region in the PdCoAu ternary system phase chart of the present invention, based on the data of Fig. 9;

Fig. 11 is a view showing schematic diagrams of working electrodes used in Examples 6 to 9. Here, an alloy thin film is formed on the surface of a glassy carbon substrate by a sputtering method;

Fig. 12 is a view showing the measurement cell and apparatus used in Examples 6 to 9;

Fig. 13 is a chart plotting steady-state ORR current (I (mA)) versus electrode potential (E (V/RHE)) for PdCoAu ternary alloys and Pd in Example 6;

Fig. 14 is an enlarged view of Fig. 13;

Fig. 15 is a chart showing the dependence of ORR current (I (mA)) on electrode potential (E (V/RHE)) for a PdCoAu ternary alloy, Pd, and Pt in Example 7;

Fig. 16 is a chart showing Pd elution rate versus the number of CV cycles for PdCoAu alloys and Pd in Example 8;

Figs. 17(a) and (b) are charts showing the dependence of ORR current in steady state (I (mA)) on electrode potential (E (V/RHE)), using methanol concentration in the electrolyte solution as a parameter, for Pt and an PdCoAu alloy in Example 9;

Fig. 18 shows the powder X-ray diffraction data of Example 12. In the figure, the vertical solid line shows the Pd (111) peak value of a simple substance of Pd metal, and the vertical broken line shows the Au (111) peak value of a simple substance of Au metal;

Fig. 19 is a chart showing the dependence of the value of oxygen reduction current per 1 g of palladium on the electrode (I (A)/g) on electrode potential (E (V) vs RHE) in Example 12 and Comparative Example 12-1;

Fig. 20 shows the powder X-ray diffraction data of Example 13. In the figure, the vertical solid line shows the Pd (111) peak value of a simple substance of Pd metal, and the vertical broken line shows the Au (111) peak value of a simple substance of Au metal;

Fig. 21 shows a chart showing the dependence of the value of oxygen reduction current per 1 g of palladium on the electrode (I (A)/g) on electrode potential (E (V) vsRHE) in Example 13;

Fig. 22 shows the powder X-ray diffraction data of Example 14. In the figure, the vertical solid line shows the Pd (111) peak value of a simple substance of Pd metal, and the vertical broken line shows the Au (111) peak value of a simple substance of Au metal;

Fig. 23 shows the dependence of the value of oxygen reduction current per 1 g of palladium on the electrode (I (A) /g) on electrode potential (E (V) vs RHE) in Example 14;

Fig. 24 shows the powder X-ray diffraction data of Example 15. In the figure, the vertical solid line shows the Pd (111) peak value of a simple substance of Pd metal, and the vertical broken line shows the Au (111) peak value of a simple substance of Au metal; and

Fig. 25 shows the dependence of the value of oxygen reduction current per 1 g of palladium on the electrode (I (A) /g) on electrode potential (E (V) vs RHE) in Example 15.

DESCRIPTION OF SYMBOLS

[0010]   [0067]

1 uncovered region
2 Teflon-covered region
3 film formation region
4 potentiostat/galvanostat
5, 6 temperature-controlled bath
7 electrochemical half cell
8 working electrode
9 counter electrode
10 reference electrode
12 electrolyte
13, 14 gas inlet
15 bubble tube
16 salt bridge
17 liquid junction
18 rubber plug
19 saturated KCl solution

BEST MODE FOR CARRYING OUT THE INVENTION

By screening a thin film of an alloy comprising palladium, the present inventors have found that a binary alloy having a composition of PdCo can be optimized in terms of ORR activity. Additionally, the present inventors have also found that by including Au in the optimum binary alloy composition, an alloy having more excellent ORR activity and more improved stability than Pd alone can be provided.

The alloy of the present invention has been developed to be used for the cathode of a polymer electrolyte fuel cell using a proton electrolyte membrane (PEM). Here, PEM refers to a solid polymer electrolyte membrane, particularly a fluorine-based solid polymer electrolyte membrane.

The alloy comprises at least three elements of Pd, Co, and Au, and is particularly effective as a catalyst when the composition ratio of the three elements is in the range of 20 atomic % $\leq$ Pd < 70 atomic %, 30 atomic % $\leq$ Co < 70 atomic %, and 0 atomic % < Au $\leq$ 30 atomic %.

Most preferably, it is desirable that a catalyst having a composition of PdCoAu is on a border curve shown in a ternary diagram represented in Fig. 10 in the accompanying drawings, or within an area surrounded by the border curve and the Pd-Co axis in Fig. 10.

If Au is more than 30 atomic %, the stability further improves, but the ORR activity decreases. In terms of both the catalytic activity and the stability of the fuel cell, a more preferable amount of Au is 20 atomic % at the maximum.

In the case of a DMFC, if Pt is used as a cathode catalyst, methanol crossover decreases the ORR catalyst activity. On the other hand, the ORR activity of Pd and Pd alloy catalysts is not easily affected by methanol crossover. Therefore, when used in a DMFC, the catalyst of the present invention is superior to the Pt catalyst not only in cost but also the practical performance of the cell.

The alloy catalyst comprising Pd, Co, and Au according to the present invention can further contain other metal(s), if necessary. As a manner of containing it, the PdCoAu alloy may be alloyed with other element(s), or a substance other than the PdCoAu alloy may be mixed. In the former case, other element(s) may be either metal or nonmetal, but is limited to those that can be alloyed with the PdCoAu alloy or any of Pd, Co, and Au. However, when Pt is selected, the amount of Pt is as small as possible so as not to deviate from the object of the present invention. As an element that can be alloyed, Ti, Fe, Ni, Nb, Mo, Ta, and W are preferable, and Ti, Fe, and Ni are particularly preferable. The number of other elements is not limited as long as it is in a range to alloy them. The upper limit of the amount of other element (s) to be added should be such that the molar ratio of other element(s) in the alloy is 25% or less, from the viewpoint of not inhibiting the performance of the PdCoAu alloy as a catalyst, and the lower limit should be a minimum amount that can provide the effect of the element to be added. On the other hand, when a substance other than the PdCoAu alloy is mixed, the substance to be mixed includes, for example, metal, alloys, metal oxides, such as a perovskite type, a bronze type, and a pyrochlore type, metal nitrides, metal sulfides, coordination polymer complexes, and large cyclic metal complexes. However, when Pt is selected, the amount of Pt is as small as possible so as not to deviate from the object of the present invention. As for the mixing proportion, in order that the performance of the PdCoAu alloy as a catalyst can be fully provided, preferably, the PdCoAu alloy of the present invention should have 70 mass % or more of the entire catalyst, and more preferably, 80 mass % or more of the entire catalyst.

The PdCoAu alloy of the present invention may be in any form and is preferably in the form of a particle from the viewpoint of making the PdCoAu alloy serve effectively as a catalyst. Since the particle size that can provide a high specific surface area is preferable for the similar reason, the upper limit value of the average particle diameter is preferably 1 $\mu$m or less, more preferably 100 nm or less, and more preferably 10 nm or less. The lower limit value of the average particle diameter is not specifically limited, but it should be about 1 nm or more from the perspective of physical stability. The "average particle diameter" stated herein is the arithmetic mean value of the particle diameters of 100 particles of substantial effective catalyst components, excluding the catalyst support, which were observed by a transmission microscope (TEM) and randomly selected therefrom.

The surface area of the catalyst increases significantly by using a carbon powder as the support of the alloy catalyst, and carbon has sufficient electric conductivity and chemical stability under operating the conditions of the fuel cell. For those reasons, a carbon powder is usually used as the support of an alloy catalyst for a fuel cell. As a method for highly dispersing and supporting a PdCoAu alloy on a carbon support, for example, the chemical methods by the reduction of a mixture of compounds of component metals, and the physical methods in which alloy particles are formed on a carbon support by a sputtering, a vacuum deposition, and a chemical vapor deposition method can be used.

Next, the ratio of the PdCoAu alloy and the carbon powder which is a support material, will be described.

If the carbon powder is too much with respect to the PdCoAu alloy, the performance of the alloy as a catalyst may not be fully provided. On the contrary, if the carbon powder is too little, the role of electron conduction may not be fully provided. Therefore, a moderate ratio is necessary. In the circumstances, the PdCoAu alloy is preferably 5 mass % to 80 mass % with respect to the total mass of PdCoAu/C.

The determination of the composition and structure of the support material of alloy obtained according to the present invention can be determined using powder X-ray diffraction (XRD), X-ray fluorescence analysis (XRF), X-ray photoelectron spectroscopy (XPS), inductively coupled plasma emission spectrometry (ICP emission spectrometry), and the like. The carbon powder used in the present invention is not specifically limited as long as it is used as a conductive support. This includes, for example, carbon black, acetylene black, furnace black, graphite, and activated carbon. For the particle size, the upper limit is preferably 1 $\mu$m or less, and more preferably 100 nm or less, and the lower limit is preferably 10 nm or more, and more preferably 30 nm or more. The specific surface area of a carbon particle is preferably 20 $m^2$/g to 1400 $m^2$/g, more preferably 400 $m^2$/g to 1000 $m^2$/g, and most preferably 600 $m^2$/g to 900 $m^2$/g. Particularly when the catalyst of the present invention is used for the catalyst of an electrode for a fuel cell, carbon black is preferable from the viewpoint of the improvement of the performance of the cell, and Ketjen Black (registered trademark, manufactured by Ketjen Black International Company) is preferably used as a carbon black.

In the present invention, fullerenes, carbon nanotubes, carbon nanohorns (a herringbone type, a platelet type, and the like), and the like can also be used other than the above carbon particles.

The fuel cell of the present invention needs to have the catalyst of the present invention in the cathode electrode, and its structure may be the same as the well-known structure. The anode electrode and solid polymer electrolyte may also be the same as the well-known anode electrode and solid polymer electrolyte, respectively. For example, platinum, a platinum-ruthenium alloy, and the like can be used as a catalyst used for the anode electrode, and the electrolyte commercially available under such trademark names as Aciplex and Nafion can be used as the solid polymer electrolyte. In order to form an electrode using the catalyst of the present invention, a binder can be added to the catalyst of the present invention to form a catalyst layer on the cathode side of the solid polymer electrolyte, and also on the anode side, similarly, the well-known catalyst can be added to a binder to form a catalyst layer. A diffusion layer and a current collector are, if necessary, integrated by a hot press or the like to form a bonded electrode assembly.

As another manner, the PdCoAu alloy of the present invention may be deposited directly on a surface of a proton-exchange membrane (PEM).

The present invention provides the following two methods as the preferable methods for manufacturing a catalyst in which fine particles of a PdCoAu alloy are supported on a support of a carbon powder. For convenience, these two manufacturing methods are referred to as manufacturing method A and manufacturing method B, respectively. These catalyst manufacturing methods will be described below in detail.

<Manufacturing Method A>

Manufacturing method A is **characterized by** comprising the step (1) of manufacturing a support material of Pd, the step (2) of manufacturing a support material of PdCo alloy, and the step (3) of manufacturing a support material of PdCoAu alloy.

First, the step of manufacturing a support material of Pd (hereinafter Pd/C) (1) will be described in detail.

The above step (1) is the step of dispersing a carbon powder in a Pd solution and then dripping a reducing agent to manufacture the support material in which Pd is supported on a carbon powder.

The Pd solution used in manufacturing method A indicates the solution in which Pd ions or complex ions containing Pd are dissolved in a solvent. For example, palladium chloride, palladium nitrate, dinitrodiamine palladium, and the like are used as a Pd source. The solvent is not specifically limited as long as it can dissolve the Pd source, but when metal salt is used for the Pd source, the polar solvents such as water and alcohol are preferable. The weight % of the Pd source in the Pd solution is not specifically limited as long as it is in a range to manufacture the uniform solution and in a range to highly disperse a carbon powder which is dispersed later, but it is preferably 0.1 weight % to 2 weight %. Also, the additives such as acid and alkali may be, if necessary, added to manufacture the uniform solution of Pd.

The step of dispersing a carbon powder in the Pd solution is not limited. But, for the purpose of the finer dispersion, the mixing and stirring apparatuses such as a paint shaker, a ball mill, and a homogenizer, an ultrasonic homogenizer, and the like can be used. The dispersion by an ultrasonic homogenizer is preferable. In this case, the dispersion is preferably performed for 10 minutes or more. It is also an effective way to previously grind a carbon powder sufficiently by a mortar or the like so that the carbon powder is easily dissolved.

A reducing agent which is dripped into the Pd solution is not limited as long as the reducing agent can reduce to and precipitate Pd metal. For example, $NaBH_4$, $LiAlH_4$, hydrazine, KOH, NaOH, and ethanol are included as the reducing agent.

Regarding the step of dripping a reducing agent into a Pd solution, it is preferably dripped slowly for time as long as possible so that Pd can be supported on a carbon powder as fine particles and with high dispersion as much as possible. For example, the conditions of this step are adjusted by defining the speed of pH change in the solution, and so on.

The Pd/C manufactured according to the above method is taken out by a suction filtration or the like, washed sufficiently with purified water, alcohol, acetone, and the like, and then dried. The drying step includes, for example, the vacuum drying, and the heating and drying with an upper limit of about 80°C. Thus, the manufacture of Pd/C is completed.

The supported catalyst in which the unnecessary by-products are mixed may be manufactured, depending on the manufacturing conditions. In this case, the by-products can be removed by washing the obtained catalyst with acid and alkali to dissolve the by-products. Acid and alkali are not limited as long as Pd/C can exist stably, and they include, for example, an aqueous solution of oxalic acid.

Next, the step (2) of manufacturing a support material of PdCo alloy (hereinafter, PdCo/C) will be described in detail.

The above step (2) is **characterized by** obtaining PdCo/C by performing the first firing under an inert gas atmosphere containing a hydrogen gas or a hydrogen gas, and successively, performing the second firing in an inert gas atmosphere, wherein the first and second firings are performed using either a support material of PdCo which is obtained by dispersing the support material of Pd in the Co solution and then removing a solvent or a support material of PdCo which is obtained by dispersing the support material of Pd in the Co solution, then further dripping a reducing agent or a pH adjuster, and then performing filtration.

The Co solution indicates the solution in which Co ions or complex ions containing Co are dissolved in a solvent. For example, halide salts of cobalt such as chloride salt, bromide salt, and iodide salt; inorganic salts of cobalt such as nitrate, sulfate, ammonia salt, perchlorate, and tetrafluoroborate salt; and organic salts of cobalt such as acetate, oxalate, acetylacetone salt, carbonyl salt, and carbonate, were used as a Co source. The solvent is not specifically limited as long as it can dissolve the Co source, but when metal salt is used for the Co source, the polar solvents such as water and alcohol are preferable. The weight % of the Co source in the Co solution is not specifically limited as long as it is in a range to manufacture the uniform solution and in a range to highly disperse Pd/C which is dispersed later, but it is preferably 0.1 weight % to 2 weight %. The additives such as acid and alkali may be, if necessary, added to manufacture a uniform Co solution.

The operation of the step of dispersing Pd/C in the Co solution is performed in the same way as the step of dispersing a carbon powder in the Pd solution, as described above.

Then, with respect to the above dispersion, the solvent is removed to form a dry solid, or a reducing agent or pH adjuster is dripped, and then the filtration is performed to obtain support material of PdCo. As to which of the above methods is to be taken, either may be used as long as all the fed Co can be supported on Pd/C by the step. For example, in the case where Co reduction, pH adjustment, and the like are difficult depending on the manufacturing conditions, and thus all the fed Co cannot be supported, the method for removing the solvent to form a dry solid is preferable. In order to aim for more uniform attachment on Pd particles, the attachment in a liquid phase is preferable, so that the method for dripping a reducing agent or a pH adjuster and then performing filtration is preferable.

When the solvent is removed to form a dry solid, the method is not limited, but the solvent is preferably removed for time as short as possible so that solidification can occur with the fed Co attached uniformly on Pd/C. The methods for removing the solvent to form a dry solid include, for example, a method for removing under vacuum by a rotary evaporator, a method for spraying on a hot plate for removal, and the like. The temperature at the time of removal is preferably 100°C or less, and more preferably 60°C or less, because side reaction does not occur easily.

When a reducing agent and a pH adjuster are dripped and then filtration is performed to obtain support material of PdCo, the method is not limited as long as all the fed Co can be precipitated and attached on Pd/C. In the Co precipitation method the fed Co may be precipitated as a simple substance of metal by the reduction using a reducing agent, or may be precipitated as a compound, for example hydroxide, by the adjustment of the pH using a pH adjuster. The selection of a reducing agent and a pH adjuster includes, for example, $NaBH_4$, $LiAlH_4$, hydrazine, KOH, and NaOH. Further, regarding the dripping step, it is preferable to drip slowly for time as long as possible so that Co metal and a Co compound can be supported on Pd/C with high dispersion as much as possible. For example, when a pH adjuster is used, the conditions of the dripping step are adjusted by defining the speed of pH change in the solution, and the like. The support material of PdCo manufactured according to the above method is taken out by a suction filtration or the like, washed sufficiently with purified water, alcohol, acetone, and the like, and then dried. The drying step includes, for example, a vacuum drying, and a heating and drying at an upper limit of about 80°C.

The first firing is performed under the inert gas atmosphere containing a hydrogen gas or a hydrogen gas. Since it is thought that the role of this firing step is to facilitate the prevention of Co metallization and oxidation by a hydrogen gas, the concentration of the hydrogen gas is adjusted appropriately, according to the above Co precipitation method. For example, when Co is reduced by a reducing agent and is precipitated as a simple substance of metal, the concentration of the hydrogen gas is relatively low, and when Co is precipitated as a compound, for example hydroxide, by the adjustment of the pH using a pH adjuster, the concentration of the hydrogen gas is relatively high. In any case, in order to provide the effect of the hydrogen gas, the lower limit of the concentration of the hydrogen gas is preferably 10 volume % or more, and the upper limit may be 100 volume %, but is preferably 80 volume % or less in consideration of safety when the firing temperature is very high. The inert gas used may be either a nitrogen gas or an argon gas, but when the firing temperature is very high, an argon gas is preferable because of the reaction between a hydrogen gas and a nitrogen gas.

The firing temperature is not limited, but the lower limit is desirably a temperature or higher, which can prevent Co metallization and oxidation, preferably 150°C or more, and more preferably 200°C or more. This is because the preventions of Co metallization and oxidation are the role of this firing step, as described above. The upper limit temperature is preferably 500°C or less, and more preferably 350°C or less. This is because if the temperature is too high, the adverse effects such as the reactivity with Pd due to the hydrogen gas and the corrosion of the carbon particles of the support due to the mixing of the hydrogen gas and Pd are expected.

The firing time also is not limited, but it is preferably 30 minutes or more and 3 hours or less in order to sufficiently give the effect of the firing as described above.

The second firing is performed under the inert gas atmosphere. It is thought that the role of this firing step is to facilitate the alloying of Pd and Co. The inert gas used may be either a nitrogen gas or an argon gas.

The firing temperature is not limited, but the lower limit is desirably a temperature or higher, which facilitates the alloying of Pd and Co, preferably 400°C or more, and more preferably 500°C or more. This is because the facilitation of the alloying of Pd and Co is the role of this firing step, as described above. The upper limit temperature is preferably 900°C or less, and more preferably 750°C or less. This is because if the temperature is too high, an increase in particle size due to the sintering is expected to cause the decrease of the specific surface area.

The firing time also is not limited, but it is preferably 1 hour or more and 8 hours or less in order to sufficiently give the effect of the firing as described above.

According to the above steps, the manufacture of PdCo/C is completed.

A supported catalyst in which the unnecessary by-products are mixed may be manufactured, depending on the manufacturing conditions. In this case, the step which is performed in the same way as the step of the Pd/C washing can be provided, as described above.

Next, the step (3) of manufacturing a support material of PdCoAu alloy (hereinafter, PdCoAu/C) will be described in detail.

The above step (3) is the step of performing the third firing under the inert gas atmosphere, using either the support material of PdCoAu obtained by dispersing the support material of PdCo alloy in the Au solution, and removing a solvent or the support material of PdCoAu obtained by dispersing the support material of PdCo alloy in the Au solution, dripping a reducing agent, and performing filtration, so as to manufacture a support material of PdCoAu alloy wherein the PdCoAu alloy is supported on the carbon powder.

The Au solution used in manufacturing method A indicates the solution in which Au ions or complex ions containing Au are dissolved in a solvent. For example, gold chloride and the like are used as an Au source. The solvent is not specifically limited as long as it can dissolve the Au source, but when metal salt is used for the Au source, the polar solvents such as water and alcohol are preferable. The weight % of the Au source in the Au solution is not specifically limited as long as it is in a range to manufacture a uniform solution and in a range for highly dispersing PdCo/C which is dispersed later, but it is preferably 0.1 weight % to 2 weight %. The additives such as acid and alkali may be, if necessary, added to manufacture the uniform solution of Au.

The operation of the step of dispersing PdCo/C in the Au solution is performed in the same way as the step of dispersing a carbon powder in the Pd solution, as described above.

Then, with respect to the above dispersion, either step of the two steps, i.e., the step that the solvent is removed to form a dry solid and the step that or a reducing agent is dripped and then filtration is performed to obtain the support material of PdCoAu is performed. As for the selection, either may be used as long as all the fed Au can be supported on PdCo/C by the step. For example, in the case where Au reduction is difficult depending on the manufacturing conditions, and thus all the fed Au can not be supported, a method for removing the solvent to form a dry solid is preferable. In order to aim for more uniform attachment on PdCo alloy particles, attachment in a liquid phase is preferable, so that a method for dripping a reducing agent and then the performing filtration is preferable.

When the solvent is removed to form a dry solid, the method is performed in the same way as the method for removing the solvent to form a dry solid in the PdCo/C manufacturing step, as described above.

When a reducing agent is dripped and then filtration is performed to obtain the support material of PdCoAu, the method is not limited as long as all the fed Co can be reduced by the reducing agent to be precipitated as a simple substance of metal and attached on PdCo/C. The selection of a reducing agent includes, for example, $NaBH_4$, $LiAlH_4$, hydrazine, KOH, NaOH, and ethanol. Further, regarding the dripping step, it is preferably dripped slowly for time as long as possible so that Au metal can be supported on PdCo/C with high dispersion as much as possible. For example, the conditions of the dripping step are adjusted by defining the speed of pH change in the solution, and the like. The support material of PdCoAu manufactured according to the above method is taken out by suction filtration or the like, washed sufficiently with purified water, alcohol, acetone, and the like, and then dried. The drying step includes, for example, a vacuum drying, and a heating and drying with an upper limit of about 80°C.

The third firing is performed under the inert gas atmosphere. It is thought that the role of this firing step is to facilitate the alloying of a PdCo alloy and Au. The inert gas used may be either a nitrogen gas or an argon gas.

The firing temperature is not limited, but the lower limit is desirably a temperature or higher, which facilitates the alloying of a PdCo alloy and Au, preferably 400°C or more, and more preferably 500°C or more. This is because the facilitation of the alloying of PdCo alloy and Au is the role of this firing step. The upper limit temperature is preferably 900°C or less, and more preferably 750°C or less. This is because if the temperature is too high, an increase in particle size due to sintering is expected to cause the decrease of the specific surface area.

The firing time also is not limited, but it is preferably 1 hour or more and 8 hours or less to sufficiently give the effect of the firing, as described above.

According to the above steps, the manufacture of PdCoAu/C is completed.

A supported catalyst in which the unnecessary by-products are mixed may be manufactured, depending on the manufacturing conditions. In this case, the step which is performed in the same way as the step of Pd/C washing should be provided, as described above.

The feed molar ratio of Pd, Co, and Au is determined appropriately by the ratio of the intended alloy composition. As for manufacturing method A, there is not so much of a difference between the feed molar ratio and the measured molar ratio after manufacturing and there are correlations between them. Therefore, each metal can be fed according to the intended alloy composition ratio, but when it is desired to precisely determine the composition ratio, the preliminary experiment is previously performed for prospect, thereby setting a feed molar ratio of Pd, Co, and Au to provide the intended alloy composition ratio.

As described above, the PdCoAu alloy of the present invention may be alloyed with other element(s), or a substance other than the PdCoAu alloy may be mixed.

In the former case, the step of adding other element(s) may be performed after or during any of the steps (1) to (3) of manufacturing method A, but is such that the manufactured alloy does not inhibit the performance of the PdCoAu alloy as a catalyst. The feed molar ratio of other element(s) is set as follows. As described above, in the manufacturing method of manufacturing method A, there is not so much of a difference between the feed molar ratio and the measured molar ratio after manufacturing and there are correlations between them. Therefore, each raw material of other element(s) can be fed according to the intended composition ratio, but when it is desired to precisely determine the composition ratio, the preliminary experiment is previously performed for prospect, thereby setting a feed molar ratio of each raw material of other element(s) to provide the intended composition ratio.

In the latter case, as for the step of adding a substance other than the PdCoAu alloy, the intended substance may be mixed after manufacturing PdCoAu/C. Or, if the manufacture of the PdCoAu alloy is not hindered, the intended substance may be added and adsorbed at any time during the PdCoAu/C manufacturing step.

The mixing amount is as described above in either case.

<Manufacturing Method B>

Another method for manufacturing the catalyst of the present invention (manufacturing method B) is a method for manufacturing a support material of PdCoAu alloy wherein the PdCoAu alloy is supported on a carbon powder by mixing and reacting a reversed micelle solution (A) with a reversed micelle solution (B), wherein the reversed micelle solution (A) comprises at least three aqueous solutions of Pd aqueous solution, Co aqueous solution, and Au aqueous solution within micelles, the reversed micelle solution (B) comprises at least a reducing agent, and if necessary, a pH adjuster, within micelles, then supporting the reactant on a carbon powder, which is a conductive support, and then performing firing, **characterized by** that the additive amount of the reducing agent is 10 equivalents to 150 equivalents with respect to all metal ions within the micelles of the reversed micelle solution (A), and that the amount of the pH adjuster added is adjusted such that the pH within the micelles after mixing the reversed micelle solutions (A) and (B) is 9 to 13.

The "reversed micelle solution" used in manufacturing method B is a solution containing micelles which are formed by mixing a surfactant with an organic solvent so that the surfactant molecules aggregate, and further containing an aqueous solution of metal ions and the like within the micelles. It is referred to as a reversed micelle solution, because the surfactant molecules are arranged in the organic solvent phase, wherein the hydrophobic groups of the surfactant molecules are directed to the outside, that is, the organic solvent phase side, and wherein the hydrophilic groups of the surfactant molecules are directed to the inside, and therefore the arrangement of the hydrophobic groups and the hydrophilic groups is the reverse of the case of an aqueous solvent phase. Such a reversed micelle solution can be adjusted by adding an aqueous solution to a solution of a surfactant dissolved in an organic solvent and then stirring them. The portions where the hydrophilic groups aggregate have the ability of holding a polar solvent such as water. The aqueous solution can be dispersed stably in the organic solvent as very small water drops of nano size, and the size can be controlled by the molar ratio of the injected water and the surfactant.

Manufacturing method B uses a method for precipitating each metal of Pd, Co, Au, and so on, or each metal compound thereof in an aqueous solution within the micelles of the reversed micelle solution as described above, by the reaction using a reducing agent.

Firstly, the organic solvent and surfactant constituting the reversed micelle solution, which are common to the reversed micelle solutions (A) and (B) in manufacturing method B will be described.

As the organic solvent forming the reversed micelle solution, the various substances can be used, and the organic solvent is not limited and includes cyclohexane, methylcyclohexane, cycloheptane, heptanol, octanol, dodecyl alcohol, cetyl alcohol, isooctane, n-heptane, n-hexane, n-decane, benzene, toluene, and xylene. n-heptane, n-hexane, and n-decane having a high boiling point are preferable because the reversed micelle solution is easily manufactured. One of these organic solvents may be used alone, or two or more of these organic solvents may be used in combination.

The surfactant forming the reversed micelle solution is not limited as long as a stable reversed micelle solution can be formed, and the surfactant includes an anionic type, for example, sodium bis(ethylhexyl) sulfosuccinate (AOT), a cationic type, for example, cetyltrimethylammonium oxalate (CTAB), and a nonionic type, for example, pentaethylene glycol dodecyl ether (PEGDB). One of these surfactants may be used alone, or two or more of these surfactants may be used in combination.

The additive amount of the surfactant with respect to the organic solvent is 10 to 300 parts by weight, and preferably 20 to 100 parts by weight with respect to 100 parts by weight of the organic solvent. This is because if the amount is less than 10 parts by weight, the formation of reversed micelles may be difficult, and if the amount is more than 300 parts by weight, rod-like micelles may be formed so that the desired size cannot be held.

Next, the reversed micelle solution (A) will be described.

The reversed micelle solution (A) comprises aqueous solutions within micelles wherein the aqueous solutions comprises at least Pd aqueous solution, Co aqueous solution, and Au aqueous solution.

The Pd aqueous solution used in manufacturing method B indicates the solution in which Pd ions or complex ions containing Pd are dissolved in an aqueous solvent. For example, ammonium hexachloropalladate, ammonium tetrachloropalladate, palladium chloride, palladium nitrate, dinitrodiamine palladium, and the like are used as a Pd source. The weight % of the Pd source in the Pd aqueous solution is not limited as long as it is in a range to manufacture a uniform solution, but it is preferably 0.01 weight % to 10 weight %, and more preferably 0.05 weight % to 2 weight %, in terms of metal weight. Also, the additives such as acid and alkali may be, if necessary, added to manufacture a uniform Pd solution.

The Co aqueous solution used in manufacturing method B indicates the solution in which Co ions or complex ions containing Co are dissolved in an aqueous solvent. For example, halide salts of cobalt such as chloride salt, bromide salt, and iodide salt; inorganic salts of cobalt such as nitrate, sulfate, ammonia salt, perchlorate, and tetrafluoroborate salt; and organic salts of cobalt such as acetate, oxalate, acetylacetone salt, carbonyl salt, and carbonate are used as a Co source. The weight % of the Co source in the Co aqueous solution is not specifically limited as long as it is in a range to manufacture a uniform solution, but it is preferably 0.01 weight % to 10 weight %, and more preferably 0.01 weight % to 2 weight %, in terms of metal weight. Also, the additives such as acid and alkali may be, if necessary, added to manufacture a uniform Co solution.

The Au aqueous solution used in manufacturing method B indicates the solution in which Au ions or complex ions containing Au are dissolved in an aqueous solvent. For example, gold chloride, chloroauric acid, and the like are used as an Au source. The weight % of the Au source in the Au aqueous solution is not limited as long as it is in a range to manufacture a uniform solution, but it is preferably 0.01 weight % to 10 weight %, and more preferably 0.01 weight % to 1 weight %, in terms of metal weight. Also, the additives such as acid and alkali may be, if necessary, added to manufacture the uniform solution of Au.

The molar ratio of water to the surfactant in the reversed micelle solution (A) is preferably 3 to 30, and more preferably 5 to 25, from the viewpoint that stable formation of reversed micelles is possible.

Next, the step of manufacturing the reversed micelle solution (A) will be described.

A solution of a surfactant dissolved in an organic solvent and an aqueous solution in which at least Pd, Co, and Au sources are dissolved are manufactured separately. Then, both solutions are mixed and dispersed to manufacture a reversed micelle solution. The dispersing step is not limited, but for the purpose of manufacturing a more uniform reversed micelle solution, the mixing and stirring apparatuses such as a paint shaker, a ball mill and a homogenizer, and the ultrasonic homogenizer, and the like can be used. The dispersion by the ultrasonic homogenizer is preferable. In this case, the dispersion time is preferably performed for 20 minutes or more. The temperature during dispersion is not limited, and the dispersion can be performed with cooling in an ice bath or the like, because the organic solvent may vaporize at high temperature.

From the viewpoint of the prevention of oxidation of metal in the aqueous solution, it is preferable to perform the dispersion while bubbling an inert gas such as a nitrogen gas during the dispersion, and further using a deoxidized solvent is effective. Particularly, in manufacturing the case where Co of a base metal is rich in the alloy composition, the above described process is more effective, because Co is easily oxidized.

It is preferable that after the reversed micelle solution (A) is manufactured, an inert gas such as a nitrogen gas is further bubbled to remove the dissolved oxygen sufficiently, for the same reason as the above description.

Next, the reversed micelle solution (B) will be described.

The reversed micelle solution (B) contains at least a reducing agent within micelles. In this case, if necessary, the reversed micelle solution (B) can further contain a pH adjuster within the micelles.

The reducing agent in manufacturing method B includes $NaBH_4$, $LiAlH_4$, hydrazine, sodium thiosulfate, citric acid, sodium citrate, L-ascorbic acid, formaldehyde, methanol, ethanol, and ethylene. The role of the reducing agent is to reduce all of the Pd source and the Au source within the micelles of the reversed micelle solution (A) and part of the Co source within the same micelles to metal, and from the viewpoint that the intended alloy composition is easily completed by stable precipitation of metal particles, $NaBH_4$ and hydrazine are preferable among the above described reducing agents. In this regard, since Co is a base metal, it is not easily reduced, compared with other precious metals. As a result, it is considered that one part can be reduced to metal, but that the rests are precipitated as cobalt hydroxide by performing the proper pH adjustment as described below.

In manufacturing method B, the additive amount of the above reducing agent is 10 equivalents to 150 equivalents with respect to all metal ions within the micelles of the reversed micelle solution (A). In the present invention, when the total of the valence numbers of the atoms within the reducing agent to perform the reduction is the same as the total of the oxidation numbers of all metal ions within the micelles, the additive amount of the reducing agent is defined as 1 equivalent. For example, the case where 1 mole of Pd (IV) ions are reduced by 5 moles of a reducing agent of $NaBH_4$ is considered herein. Since a Pd ion has valence of 4, the total of the oxidation numbers thereof can be roughly calculated as "1 mole $\times$ valence of 4 = 4". On the other hand, since the atoms to perform the reduction of $NaBH_4$ are four hydrogen ions, the valence number of it is 1. Therefore, the total of the valence numbers can be roughly calculated as 5 moles $\times$ valence of $1 \times 4 = 20$. Therefore, the additive amount of the reducing agent of $NaBH_4$ is 5 equivalents from the calculation "20/4 = 5".

Since Co source of a base metal is included in metal sources to be reacted, for example, when the Co source is subjected to the unnecessary oxidation during reaction, the loss due to the facts that the reducing agent is consumed for the extra reaction to reduce the oxidant of the Co source occurs. Therefore, the lower limit of the additive amount of the reducing agent is preferably 20 equivalents, and more preferably 30 equivalents. The upper limit is preferably 130 equivalents, and more preferably 100 equivalents, because if the amount of the reducing agent is excessively added, the reducing agent may not be dissolved in water which is a solvent within the micelles. Particularly, in manufacturing the case where Co is rich in the alloy composition, the additive amount of the reducing agent is preferably set at an amount as large as possible within the range of the present invention for the above reasons.

Manufacturing method B is **characterized in that** the additive amount of the pH adjuster is adjusted so that the pH within the micelles, after mixing the reversed micelle solutions (A) and (B), can be 9 to 13. The pH adjuster includes alkali such as NaOH and KOH, and acid such as HCl, and the pH adjustment is achieved by previously mixing aqueous solutions having the same composition as the reversed micelle solutions (A) and (B) that constitute the aqueous phase within reversed micelles, and by adjusting the amount of a pH adjuster to provide the intended pH. As described above, this pH adjustment is performed so that the rests of the fed Co source, which cannot be reduced to metal is precipitated as cobalt hydroxide. Therefore, the range of pH is 9 to 13, but is preferably 9.5 to 12.5, and more preferably 10 to 12.

The additive amount of the pH adjuster can be set by previously performing a preliminary experiment. After performing the manufacture of only the solution within the micelles of the reversed micelle solution (A) to which the necessary metal salts and the like are added and the manufacture of only the solution within the micelles of the reversed micelle solution (B) to which the necessary reducing agent and pH adjuster and the like are added, and mixing both solutions, pH measurement is performed. The measurement can be performed by pH test paper or a pH meter. The pH adjuster is appropriately changed so that this pH value is within the intended range, thereby determining a set amount. Then, the actual reaction is performed at the additive amount determined by the above preliminary experiment. And after the reversed micelle solutions (A) and (B) are mixed, the pH of the reaction liquid is measured using pH test paper or a pH meter to confirm that the pH is within the intended range.

The molar ratio of water to the surfactant in the reversed micelle solution (B) is preferably 3 to 30, and more preferably 5 to 25, from the viewpoint that the stable formation of reversed micelles is possible.

Next, the step of manufacturing the reversed micelle solution (B) will be described.

The solution of a surfactant dissolved in an organic solvent and the aqueous solution dissolving at least a reducing agent, wherein the aqueous solution further dissolves a pH adjuster if necessary are manufactured separately. Then, both solutions are mixed and dispersed to manufacture a reversed micelle solution. The dispersing step is performed in the same way as the step in the reversed micelle solution (A) as described above.

From the viewpoint of the prevention of oxidation of metal in the aqueous solution when reacting with the reversed micelle solution (A), it is preferable to perform while bubbling an inert gas such as a nitrogen gas during the dispersion. Further, it is effective to use the deoxidized solvent as a solvent. Particularly, in manufacturing the case where Co of a base metal is rich in the alloy composition, the above processes are more effective, because Co is easily oxidized.

It is preferable that after the reversed micelle solution (B) is manufactured, an inert gas such as a nitrogen gas is further bubbled to remove the dissolved oxygen sufficiently, for the same reason as the above description.

Next, the number of reversed micelles in the reversed micelle solutions (A) and (B) will be described.

The number of reversed micelles in the solution can be changed by an increase or decrease in the additive amount of water with respect to the amount of the organic solvent, when the molar ratio of water to the surfactant is fixed. For example, if the additive amount of water is increased, the number of reversed micelles increases. The reaction using the reversed micelle solutions in the present invention is the reaction in which the various metal sources within the reversed micelles of the reversed micelle solution (A) are either reduced by the reducing agent within the reversed micelles of the reversed micelle solution (B) due to the collision of the reversed micelles of the reversed micelle solution (A) with the reversed micelles of the reversed micelle solution (B), or become, for example hydroxide, by pH adjustment. Therefore, if the ratio of the number of the reversed micelles of the reversed micelle solution (B) to the number of the reversed micelles of the reversed micelle solution (A) is low, the reaction proceeds by the facts that one reversed micelle of the reversed micelle solution (B) repeats the collision with many reversed micelles of the reversed micelle solution (A). In this case, since the concentration of the reducing agent within the reversed micelles of the reversed micelle solution (B) decreases for each collision, the reaction of all metal sources within the reversed micelles of the reversed micelle solution (A) may not be completed. On the contrary, if the ratio is large, the concentration of the reducing agent in one reversed micelle of the reversed micelle solution (B) is low from the beginning. In this case, the improvement in the frequency of collision may be needed. In the circumstances, the ratio of the number of the reversed micelles of the reversed micelle solution (B) to the number of the reversed micelles of the reversed micelle solution (A) is preferably 0.5 to 5, and more preferably 1 to 3.

Next, the step of mixing and reacting the reversed micelle solution (A) with the reversed micelle solution (B) will be described.

The detail of reaction in this step is as described above, and the reaction proceeds by the collision between the reversed micelles. In this case, it is necessary that the various metal sources within the micelles of the reversed micelle solution (A) are precipitated by completely reacting them, and that the state of dispersion of the reversed micelles is held so that sedimentation does not occur due to the aggregation between the reversed micelles.

The mixing of both solutions is performed with the combination of the dispersion by an ultrasonic homogenizer and the stirring by a magnetic stirrer or the like. By the dispersion using an ultrasonic homogenizer, the reaction proceeds by the collision between the reversed micelles. In this case, the aggregation between the reversed micelles can be prevented, so that the state of dispersion of the reversed micelles can be held. The stirring by a magnetic stirrer or the like is performed to hold the temperature in the reaction liquid uniformly.

As for the temperature of the reaction liquid in the above step, if the temperature is low, the frequency of collision between the reversed micelles decreases. In this case, the reaction may be incomplete. Also, the ability of the reduction reaction of the Co source of a base metal to Co metal decreases, so that the unreacted part of the Co source may remain. Therefore, the lower limit of this reaction temperature needs to be room temperature or higher, and is preferably 40°C or more. Regarding the upper limit, it is used as a standard whether to have the boiling point of the organic solvent used or lower in order to prevent the evaporation of the organic solvent. In this regard, the upper limit is preferably 100°C or less. The reaction time in the above step needs to be adjusted appropriately by the reaction species and the amount of the solvent. The lower limit is preferably 20 minutes or more, and the upper limit is preferably 3 hours or less.

Further, from the viewpoint of the prevention of oxidation of metal in the reaction liquid, the reaction is preferably performed while bubbling an inert gas such as a nitrogen gas during reaction.

According to manufacturing method B, by satisfying the conditions that the additive amount of the reducing agent within the micelles is largely excessive, that the proper pH adjustment is performed, and that further the temperature during the reaction is set at room temperature or higher, preferably 40°C or more, Co of a base metal can be precipitated completely as metal or hydroxide. Particularly, when Co is rich in the alloy composition, the effects according to the above described conditions are more remarkable.

Next, the step of performing the support on a carbon powder of a conductive support will be described.

After the reaction between the reversed micelle solutions as described above is finished, the support on a carbon powder is performed by the following two stages. In the first stage, a carbon powder is introduced, with keeping the conditions of the reaction between the reversed micelle solutions, that is, with keeping the combination of the dispersion by an ultrasonic homogenizer and the stirring by a magnetic stirrer or the like and the reaction temperature. This state is held for about 5 to 30 minutes, and then is held by only the stirring by a magnetic stirrer or the like at room temperature for about 2 to 3 hours. By this, the support on a carbon powder is completed. The former operation has the role of preventing the aggregation between the reversed micelles before the support on a carbon powder is performed.

After the step of performing the support on a carbon powder is finished, the intended material is taken out from the reaction liquid and dried. The suction filtration or the like is used for takeout, and it is washed sufficiently using acetone, water, and the like. After washing, it is dried sufficiently by a natural drying, a vacuum drying, a drying using an evaporator, or the like.

Next, the firing step of manufacturing method B will be described.

Firing is performed under an inert gas atmosphere containing a hydrogen gas or a hydrogen gas. It is considered that the role of this firing step is to facilitate Co metallization and oxidation prevention by a hydrogen gas and to facilitate alloying by high temperature treatment. Therefore, the concentration of the hydrogen gas depends on the ratio of Co of a base metal in the alloy composition. When the Co ratio is low, the concentration of the hydrogen gas is relatively low. On the contrary, when the Co ratio is high, the concentration of the hydrogen gas is relatively high. In either case, in order to provide the effect of the hydrogen gas, the lower limit of the concentration of the hydrogen gas is preferably 5 volume % or more, and the upper limit may be 100 volume %, but is preferably 80 volume % or less in consideration of safety when the firing temperature is very high. The inert gas used may be either a nitrogen gas or an argon gas, but when the firing temperature is very high, an argon gas is preferable because a hydrogen gas and a nitrogen gas may react. The firing temperature is not limited, but the lower limit is desirably a temperature or higher, which facilitates the alloying as described above. This is because the facilitation of the alloying is the role of this firing step. The lower limit is preferably 500°C or more, and more preferably 600°C or more. The upper limit temperature is preferably 1000°C or less, and more preferably 900°C or less. This is because if the temperature is too high, an increase in particle size due to the sintering may decrease the specific surface area.

The firing time also is not limited, but it is preferably 30 minutes or more and 3 hours or less in order to sufficiently give the effect of firing as described above.

By the above steps, the manufacture of a support material of PdCoAu alloy (PdCoAu/C) is completed.

A supported catalyst in which the unnecessary by-products are mixed may be manufactured, depending on the manufacturing conditions. In this case, the by-products can be removed by washing the obtained supported catalyst with acid and alkali to dissolve the by-products. Acid and alkali are not limited as long as PdCoAu/C can exist stably, and they include, for example, an aqueous solution of oxalic acid.

The feed molar ratio of Pd, Co, and Au in the manufacture step of manufacturing method B is determined appropriately by the intended alloy composition ratio. As for the manufacturing method of the present invention, there is not so much of a difference between the feed molar ratio and the measured molar ratio after manufacturing and there are correlations between them. Therefore, each metal can be fed according to the intended alloy composition ratio, but when it is desired to precisely determine the composition ratio, the preliminary experiment is previously performed for prospect, thereby setting a feed molar ratio of Pd, Co, and Au to provide the intended alloy composition ratio.

Next, the step of alloying the PdCoAu alloy with other element(s) will be described.

Element source(s) to be added is further added within the micelles of the reversed micelle solution (A) in manufacturing method B for manufacture. As other element source(s), inorganic salts such as halide salt, nitrate, sulfate, ammonia salt, perchlorate, and tetrafluoroborate salt; organic salts such as acetate, oxalate, acetylacetone salt, carbonyl salt, carbonate, and alkoxide salt; and the like are appropriately used.

On the other hand, within the micelles of the reversed micelle solution (B), the amount of the reducing agent and the pH adjuster is finely adjusted appropriately, depending on whether other element(s) to be added is precipitated by the reduction reaction of the reducing agent or precipitated as a compound such as hydroxide by pH adjustment. In the former case, the amount of the reducing agent needs to be increased by an amount necessary for other element(s). In the latter case, the additive amount of the pH adjuster needs to be increased or decreased to provide a pH value to stably exist the compound.

Then, by providing the manufacturing steps in the same way as the manufacturing steps as described above, the support material of alloy in which an PdCoAu alloy is alloyed with other element(s) can be manufactured. However, in order to perform the complete reaction between the reversed micelle solutions, the fine adjustment of the molar ratio of water to the surfactant may be performed, and the part of necessary water may be added later during reaction between the reversed micelle solutions without being previously added within the micelles of the reversed micelle solutions. Such an application can be performed, if necessary.

Next, the step of mixing a substance other than the PdCoAu alloy will be described.

The intended substance may be mixed after manufacturing PdCoAu/C, or the intended substance may be previously supported on a carbon powder of a support material, and the introduction of the above support material may be performed instead of the introduction of a carbon powder in the manufacturing steps of the present invention.

The present invention and its effectivity will be described specifically by way of the following reference examples, examples, and comparative examples.

Reference Examples 1 and 2 relate to the preparation and test of binary alloys, and Example 1 to Example 13 relate to the preparation and test of ternary alloys according to the present invention. In Reference Example 1, Reference Example 2, and Examples 1 to 5, an alloy thin film having a composition gradient was formed on a silicon nitride wafer substrate by a vacuum deposition method, and performance evaluation was performed in a screening manner, using 100 electrodes in the form of an alloy. In Examples 6 to 9, an alloy thin film was formed on a carbon plate by a sputtering method to manufacture an electrode, and in Example 10 to Example 13, a powder of a supported catalyst in which the fine particles of an alloy were supported on a carbon powder support was adhered to a carbon rod to manufacture an electrode. In Examples 6 to 13, the performance evaluation was performed using a half cell in which the manufactured electrode was used as a working electrode.

Firstly, the detail of the experiments of Reference Example 1, Reference Example 2, and Examples 1 to 5 is described. Samples of thin film alloys were deposited using the techniques of WO 2005/035820 and evaluated by a technique disclosed by Guerin et al in J. Comb. Chem. 2004, 6, 149-158, "Combinatorial Electrochemical Screening of Fuel Cell Electrocatalysts", the entire disclosure of which is incorporated herein by reference. The substrates for electrochemical screening were electrochemical arrays consisting of a 10 by 10 arrangement of gold electrodes on a silicon nitride wafer substrate. The electrochemical evaluation was performed by recording the current at all 100 electrodes on an array simultaneously. The details are described in the above documents. An ORR test that will be described in Examples 1 to 5 shows the effectivity of PdCoAu alloy catalysts when used as the cathode catalyst of a polymer electrolyte fuel cell. In an ORR current measurement in the steady state, once the applied potential was increased from 0.7 to 0.9, and then the potential was decreased to 0.7 V (vs SHE) while repeating holding at each potential for 90 seconds at an interval of 50 mV. An oxygen gas was bubbled in the electrolyte during the experiment. The aqueous solution of 0.5 M $HClO_4$ was used for the electrolyte, and the temperature was room temperature (20°C). In cyclic voltammetry (CV) experiment, potential sweep was performed in a potential range of 0.4 to 1.2 V (vs SHE) at a speed of 50 mVs$^{-1}$. This CV experiment was performed in the aqueous solution of 0.5 M $HClO_4$ without the dissolved oxygen at 20°C.

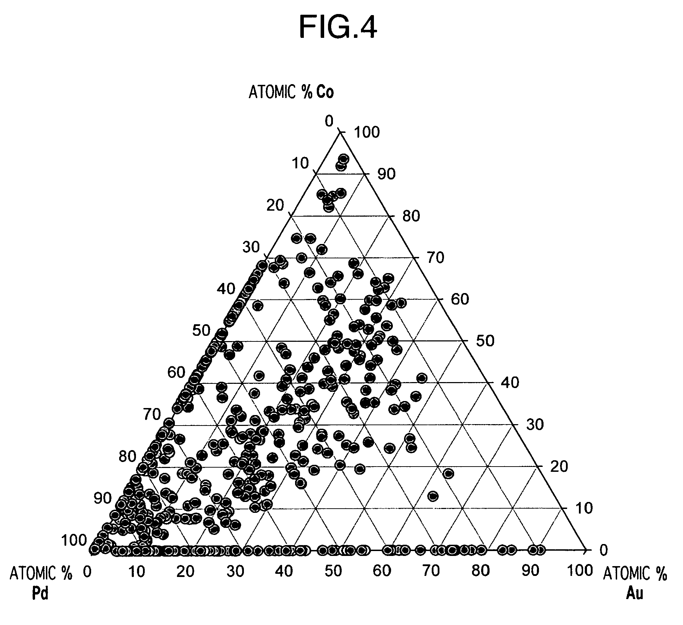

The composition of samples was measured using EDS and expressed in atomic %. The composition range for three ternary system samples manufactured was: (1) the atomic % of Pd (7.6 to 73.1), the atomic % of Co (5.1 to 65.0), and the atomic % of Au (16.5 to 47.2); (2) the atomic % of Pd (12.9 to 89.9), the atomic % of Co (0.2 to 70.4), and the atomic % of Au (6.7 to 50.9); and (3) the atomic % of Pd (2.5 to 98.1), the atomic % of Co (0 to 93.5), and the atomic % of Au (0 to 63.0), respectively. The composition range for two binary system samples manufactured was: (4) the atomic % of Pd (9.4 to 95.5) and the atomic % of Au (4.5 to 90.6); and (5) the atomic % of Pd (31.8 to 99.7) and the atomic % of Co (0.3 to 68.2), respectively. All compositions subjected to the screening test were plotted in Fig. 4 in atomic percent for samples screened in a PdCoAu ternary system and binary system phase space. Judging from the result of ternary systems, the activity of AuCo binary systems was low. For that reason, composition screening experiment was not performed for AuCo binary systems. Further, the activity of Pd alone was measured using an alloy consisting of 100 Pd electrodes, wherein all of 100 Pd electrodes are the same. 600 thin film samples in total were prepared and the oxygen reduction activity of PdCoAu alloys was screened.

Reference Example 1

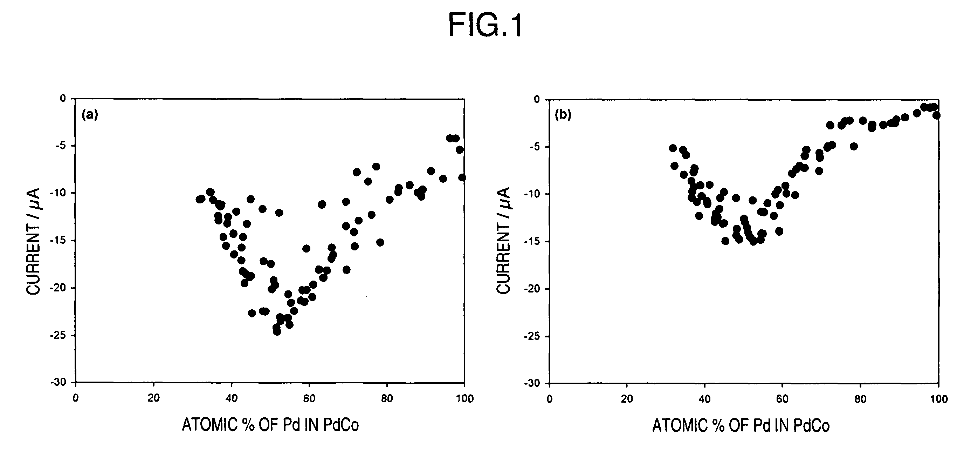

For PdCo binary systems, the steady-state current in oxygen reduction reaction was measured at potentials of 0.7 and 0.8 V (vs SHE). Fig. 1 shows the steady-state current in oxygen reduction reaction at 0.7 V (vs SHE) (Fig. 1a) and 0.8 V (vs SHE) (Fig. 1b). This data shows that in the composition of PdCo having an atomic percent ratio of 50:50 the maximum value is clearly present in the oxygen reduction activity. This optimum composition did not depend on the value of the applied potential and was constant. In both cases, the activity of the optimum composition was significantly larger than that in the case of 100% Pd, generally four times at 0.7 V, and generally seven times at 0.8 V.

Reference Example 2

The oxygen reduction specific activity of PdCo binary systems at 0.7 V (vs SHE) was evaluated using the surface area calculated from the amount of charge required for the oxidation of CO adsorbed on Pd atoms on the sample surface. The amount of charge required for CO oxidation was measured as follows. Firstly, a CO gas was bubbled through an electrolyte for 20 minutes to saturate the surface of a sample with CO, and simultaneously, a potential of 0.1 V (vs SHE) was applied to the alloy, subsequently, an argon gas was bubbled for 5 minutes, and simultaneously, the same applied potential was maintained to remove CO from the solution, wherein CO was dissolved but not adsorbed. Then, potential sweep was performed on the alloy in a range of 0.0 V to 1.2 V (vs SHE) at a sweep speed of 50 mVs$^{-1}$ for four cycles. The anode charge at 0.5 to 1.2 V was calculated using a cyclic voltammogram for the first cycle and the fourth cycle. The amount of charge associated with the oxidation of the monomolecular layer of adsorbed carbon monoxide (CO (ads)) was calculated by subtracting charge ($Q_o$) (fourth cycle) associated with the generation of a surface oxide layer from charge ($Q_{co+o}$) (first cycle) associated with the simultaneous generation of a surface oxide layer and the oxidation of adsorbed carbon monoxide.

$$Q_{CO} = Q_{CO+O} - Q_O \quad [1]$$

The amount of charge for the oxidation of carbon monoxide was converted to the value of surface area by dividing these amounts by a constant of 410 $\mu Ccm^{-2}$. This constant is a value used for determining the true surface area of a polycrystalline platinum electrode. This is based on the assumptions that the cover rate is 100 %, that there is 1 CO (ads) per the surface Pt atom, and that a charge of 2e$^-$ is required for the oxidation of each CO (ads) to $CO_2$.

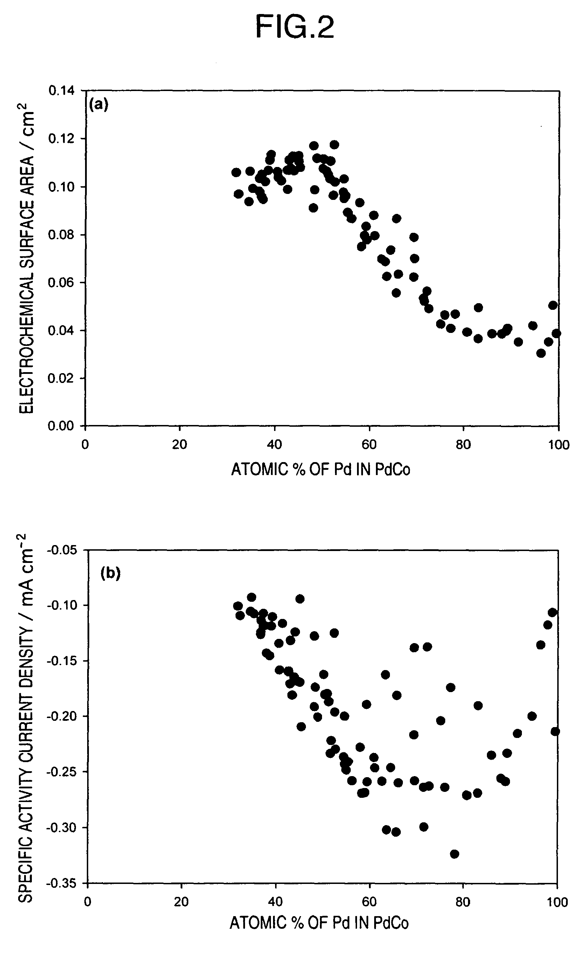

Fig. 2(a) shows the obtained estimated values of the surface area. For composition having less than 80 atomic % Pd, the surface area of the samples increases largely, and this increase in area reaches the maximum when Pd is 50 atomic %. It is thought that this area increase is caused by the dissolution of Co from binary alloys.

Fig. 2(b) shows the specific activity current of PdCo binary systems in oxygen reduction reaction which is obtained by dividing the data of Fig. 1(a) by the estimated values of surface area. The specific activity for binary systems is maximum when Pd is 70 to 80 atomic %. The fact that there is still a maximum value after performing surface area correction is the evidence that adding Co to Pd has the effect of providing more excellent ORR activity than Pd alone.

Reference Example 3

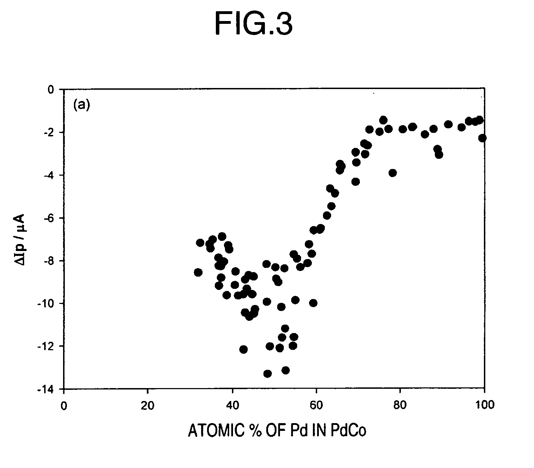

The differences in peak current for the reduction of oxide on the sample surface in cyclic voltammograms before and after the oxygen reduction screening experiment are used as a preliminary standard for sample stability. It is clear from Fig. 3 that a change in peak current is very significant for optimum PdCo composition. This suggests that an increase in the activity of these PdCo materials is obtained at the cost of stability.

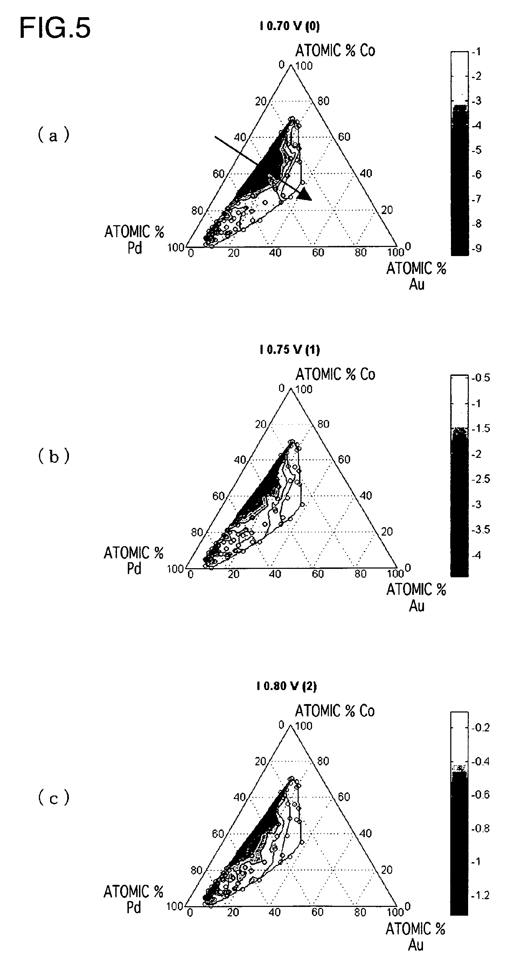

Example 1
The ORR current in steady state was measured for one of PdCoAu alloys. The oxygen reduction current in steady state at potentials (a) 0.70 V, (b) 0.75 V, and (c) 0.80 V (vs SHE) is shown in Figs. 5(a), 5(b), and 5(c), respectively. It is clear from these figures that the region of the highest activity is in a composition range in which Pd is 40 to 60 atomic %. The arrow in Fig. 5(a) shows the direction of the decrease of activity caused by adding Au to the alloys with the amount of Au increased.

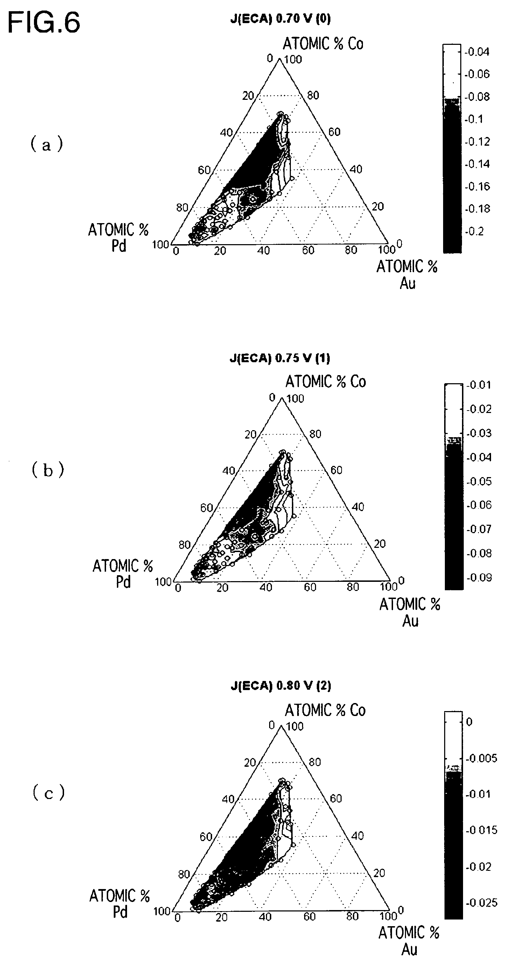

Example 2
The dependence of specific activity current on composition was obtained based on the data of Example 1. The specific activity current was calculated in the same way as the method described in Reference Example 2, using the surface area measured from CO stripping experiment. The result is shown in Fig. 6. It is seen in Fig. 6 that the composition when the current is maximum is substantially the same as the composition region in Fig. 5. This indicates that this result is caused not by an increase in surface area provided by the dissolution of the Co component and the like, but by an increase in activity specific to the material.

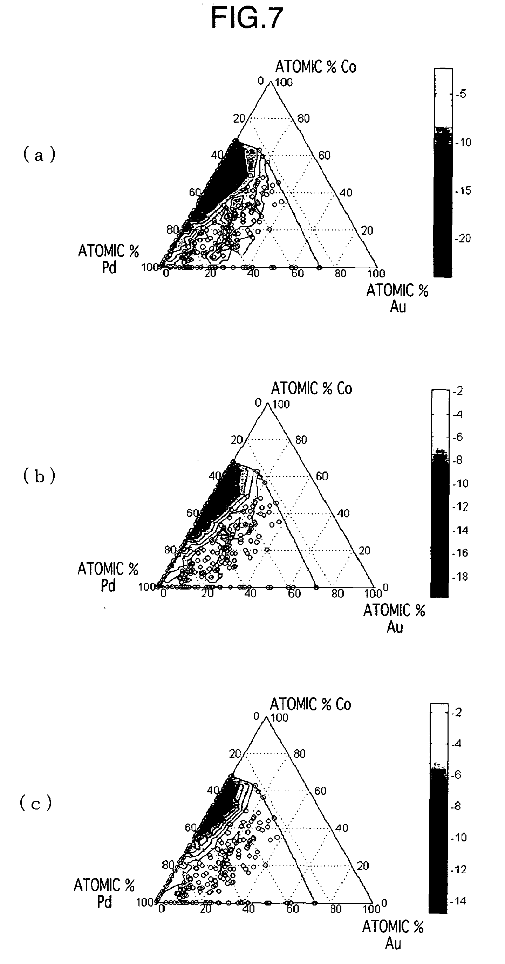

Example 3
The ORR current in steady state was measured for PdCo and PdAu binary alloys and an alloy of Pd alone in addition to all of the three PdCoAu ternary alloys. The oxygen reduction current in steady state at potentials (a) 0.70 V, (b) 0.75 V, and (c) 0.80 V (vs SHE) is shown in Fig. 7. It is seen from Fig. 7 that the region of the highest activity is in a composition range in which Pd is 40 to 60 atomic % along the binary system axis, and that when Au is added to alloys with the amount of Au increased, the activity decreases. However, considering that in PdAu binary systems the activity is very low when Pd is 90 atomic % or less (Au is 10 atomic % or more), it is a surprising result that in ternary systems, the high activity is maintained until the content of Au is 20 atomic %.

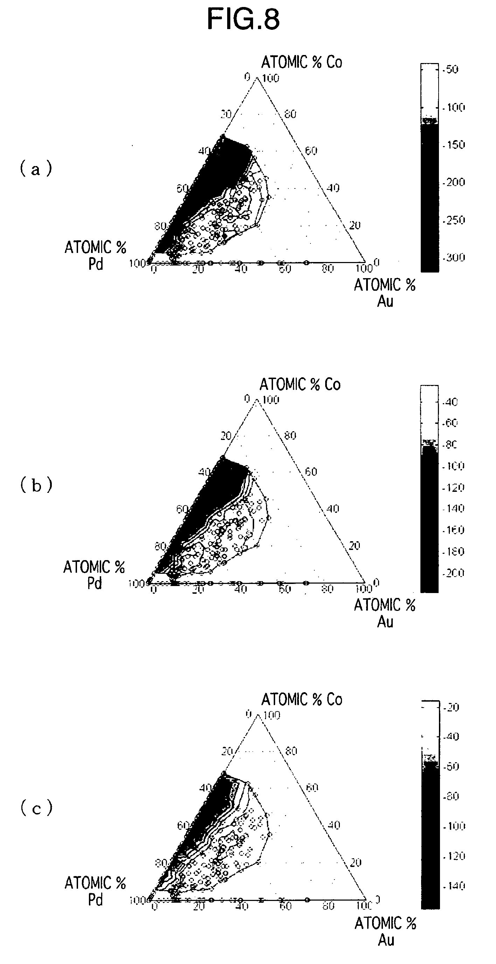

Example 4
The dependence of specific activity current on composition was obtained based on the data of Example 3. The specific activity current was calculated in the same way as the method described in Reference Example 2, using the surface area measured from CO stripping experiment. The result is shown in Fig. 8. It is seen that the ORR activity is at the maximum value in a composition range in which Pd is 40 to 60 atomic % along the PdCo binary system axis, as in Fig. 7. It is seen that when Au is added to the alloys by increasing the amount of Au, the activity decreases, but the high activity of Pd-Co binary systems is maintained in ternary systems until Au is 20 atomic %.

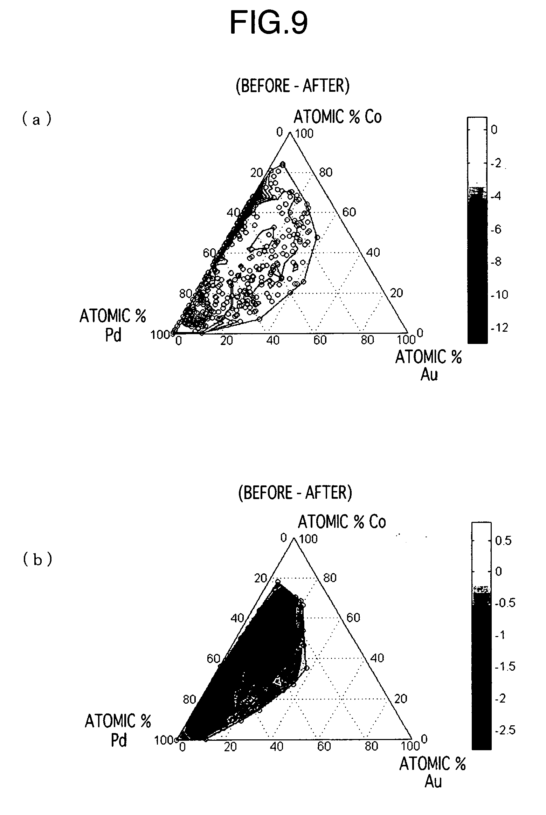

Example 5
The differences in peak current for the reduction of oxide on the sample surface in cyclic voltammograms before and after the oxygen reduction screening experiment were taken as the preliminary standard for sample stability and plotted in Fig. 9.
In Fig. 9(a), the data from binary and ternary alloys are plotted together. A change in surface oxide reduction peak current for binary alloy systems (also shown in Fig. 3 for binary systems) is significantly larger than that for ternary systems. In Fig. 9(b), the same data for only the ternary alloys are plotted. By comparing the current scales for the two plots, it is clear that a change in surface oxide reduction peak current is significantly small for all of the ternary alloys. Considering that the differences between surface oxide reduction peak current measured before and after ORR experiment are expected to show the stability of the samples, it can be said that in a particular composition region for ternary systems the specific activity is high and the stability (including a corrosion resistance) is good.
Next, in Examples 6 to 9, the performance evaluations were performed using a working electrode in which an alloy thin film was formed on a carbon plate by a sputtering method. In Examples 6 to 9, the sulfuric acid aqueous solution of 0.5 M was used as an electrolyte. In Example 8, the temperature was 80°C, and except Example 8, the temperature was room temperature (25°C).

Example 6
A Pd-Co-Au ternary alloy film was manufactured on a substrate by the simultaneous sputtering.
The substrate was a glassy carbon plate having a size of 100 mm (L) x 10 mm (W) x 3 mm (t). As shown in Fig. 11(a), the alloy film was formed on a region of 20 x 10 mm (a region denoted by numeral 3 in the figure), and other region (a region denoted by numeral 2 in the figure), except for a clipped region (a region denoted by numeral 1 in the figure), was coated with Teflon (registered trademark) to eliminate the effect of carbon. Target materials of Pd, Co, and Au (3 inches in diameter) were set in a vacuum chamber. The substrate was held on a rotatable table apart from the targets by about 15 cm, and the vacuum chamber was evacuated to a degree of vacuum of less than $4 \times 10^{-4}$ Pa. Then, an argon gas was introduced into the chamber so that the pressure was 0.5 Pa, and DC power was applied to each target. While a shutter between the rotary table and the targets was open, a ternary alloy film was formed on the substrate. As a comparative example, a Pd film was manufactured by a similar method. The deposition speed of Pd, Co, and Au was about 0.085, 0.032, and 0.098(nm/minute/watt), respectively. When an alloy thin film was formed, DC power applied to each target material was determined to provide the desired alloy composition. The thickness of the films was all 200 nm. The composition of each ternary alloy film is shown in Table 1. Table (1) shows the target composition and measured composition of the PdCoAu ternary alloys of Example 6. The Co/Pd atomic ratio of three ternary alloy films was set to be 1.125. Alloy A and alloy B are examples, and alloy C is a comparative example. (The composition of alloy A and alloy B is within the region shown in Fig. 10, but alloy C is outside the region.)

[Table 1]

| | Composition of film (atomic %) | | | | | |
|---|---|---|---|---|---|---|
| | target value | | | measured value | | |
| | Pd | Co | Au | Pd | Co | Au |
| alloy A | 42 | 48 | 10 | 40,9 | 47.6 | 11.5 |
| alloy B | 38 | 42 | 20 | 35.8 | 41.7 | 22.5 |
| alloy C | 33 | 37 | 30 | 31.2 | 37.3 | 31.5 |

The measurement of film composition was performed using a model ZSX-100e (Rigaku) X-ray fluorescence spectrometer having a sample holder having an opening diameter of 3 mm. The intensity of Pd-L$\beta$1, Au-L$\alpha$, and Co-K$\alpha$ was measured for the film samples, and the standard specimens of Pd, Au, and Co, respectively, and then, the composition of the alloy films was determined by a fundamental parameter method. Here, ZSX ver. 3.13 software (Rigaku) was used for the determination of composition.

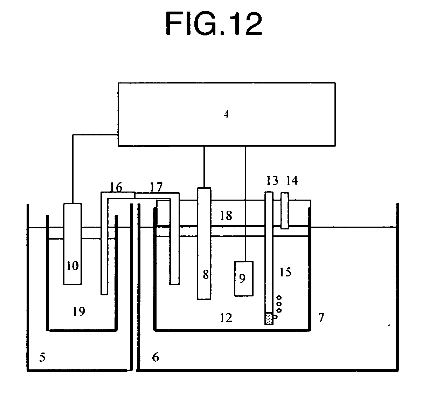

The ORR activity was measured using an electrochemical half cell and a potentiostat/galvanostat (Solartron Model 1287). The measurement apparatus is shown in Fig. 12. Ag/AgCl and Pt black were used as a reference electrode and a counter electrode, respectively. An oxygen gas was bubbled for 30 minutes or more before measurement, and then while stirring an electrolyte aqueous solution, the oxygen gas was flowed on its surface during the measurement of ORR current.

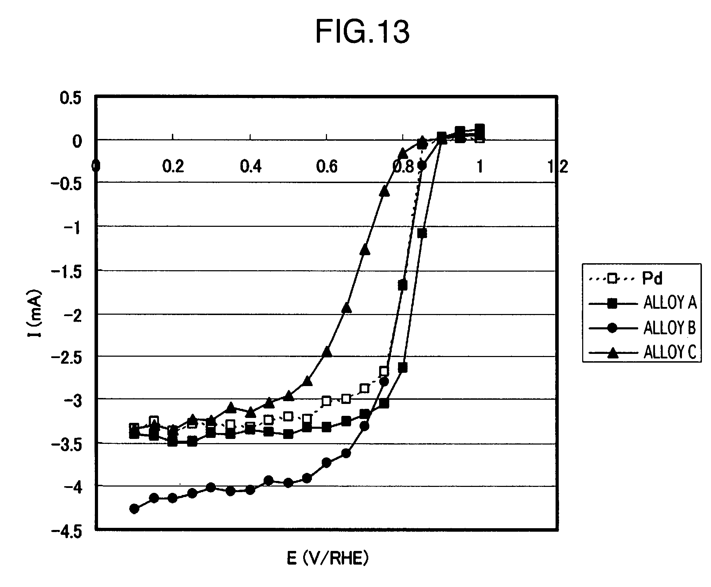

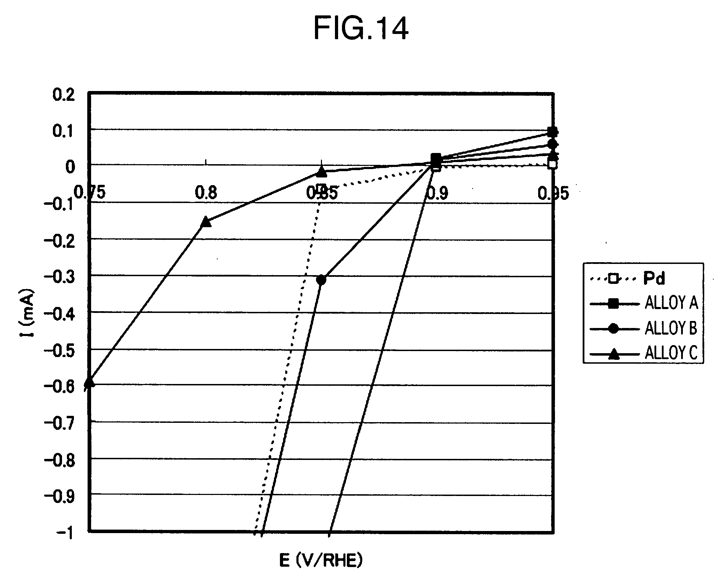

The ORR current in steady state was measured by the following method. As the pretreatment before measurement, a potential cycle was provided 50 times between 0.05 V and 1.0 V (vs RHE) to electrochemically polish the film. After this pretreatment, the potential was decreased in a stepwise pattern for each 50 mV in the range from 1.0 V to 0.1 V (vs RHE). Each potential was held for 60 seconds. Immediately after the potential was changed, the current showed a transient change. In the circumstances, the average value of current for last 40 seconds in each step was determined as ORR current in the steady state. Fig. 13 and Fig. 14 show the dependence of ORR current in the steady state on potential. Fig. 14 is an enlarged view of Fig. 13.

As shown in Fig. 14, the ORR starting potential of alloy A and alloy B was higher than that of the palladium film. This shows that ternary alloys A and B have smaller overvoltage than palladium. The starting potential of alloy B was lower than that of alloy A, but the ORR current in the saturation region (less than 0.5 V (vs RHE)) was larger than that of palladium. On the other hand, compared with them, alloy C has not only large overvoltage but also smaller ORR current than palladium.

Example 7

The Pd-Co-Au ternary alloy film D was manufactured by substantially the same method as in Example 6, except that a glassy carbon substrate was not coated with Teflon (registered trademark) as shown in Fig. 11(b). The DC sputtering power of Pd, Co, and Au was determined such that in the film composition, Pd was 0.4 atomic %, Co was 0.45 atomic %, and Au was 0.15 atomic %. After sputtering, the alloy film was annealed at 600°C for 6 hours. The films of platinum and palladium were manufactured as comparative examples. The thickness of all films was 200 mm.

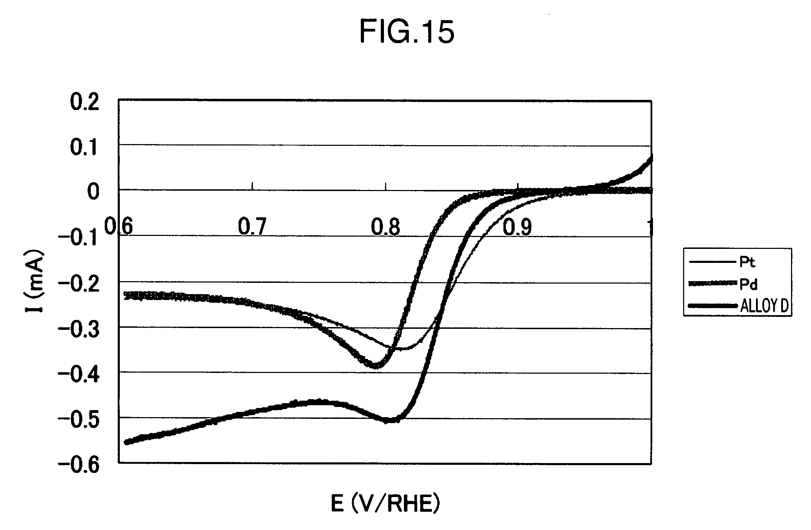

The ORR activity was evaluated in the same way as Example 6. The sulfuric acid aqueous solution of 1N was used as an electrolyte, and the temperature was 25°C. An oxygen gas was bubbled for 30 minutes or more before the measurement, and without stirring the electrolyte aqueous solution, the oxygen gas was flowed on its surface during measurement. The measurement was carried out by the following method. As the pretreatment before the measurement, a potential cycle was performed 50 times at a potential of 0.05 V to 1.0 V (vs RHE) to electrochemically polish the film. After the pretreatment, the potential of the working electrode was swept, starting from 1.0 V (vs RHE) to 0.6 V (vs RHE), at a sweep speed of 1 mV/second. Subsequently, a nitrogen gas was bubbled for 30 minutes or more, and then, while flowing the nitrogen gas on the surface of the solution, the potential of the working electrode was swept by the same method. Finally, at each potential, from the former measured current (i.e. the measured current in the oxygen saturation state), the latter measured current (i.e. the measured current in the nitrogen saturation state) was subtracted. The result is shown in Fig. 15.

As shown in Fig. 15, the ORR starting potential of alloy D was higher than that of palladium. The peak current was larger than that of platinum. Further, the ORR current/potential gradient of alloy D was steeper than that of platinum.

Example 8

Pd-Co-Au ternary alloy film E was manufactured by the same method as in Example 7. Alloy F and a palladium film were manufactured as comparative examples. The compositions of alloy E and alloy F were 0.4 atomic % Pd, 0.45 atomic % Co, and 0.15 atomic % Au; and 0.5 atomic % Pd and 0.5 atomic % Co, respectively. The films of alloy E and alloy F were annealed at 600°C for 5 hours in the same way as Example 7.

A durability test was carried out for these three electrodes by the following method.

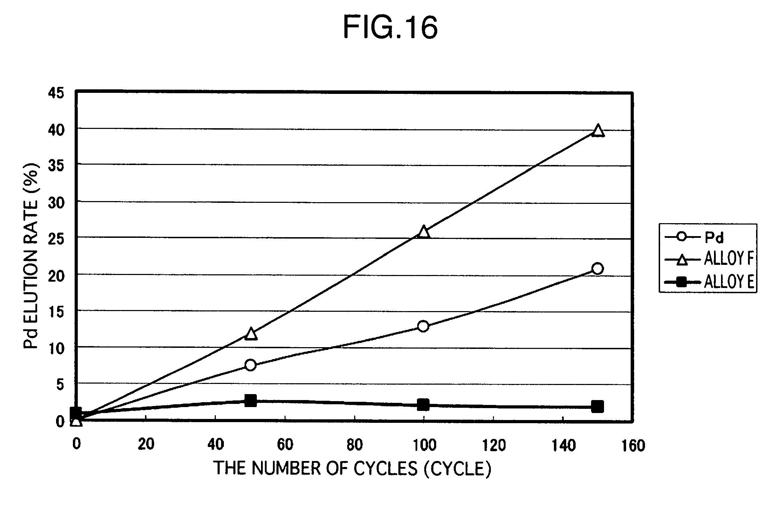

The same half cell and potentiostat/ galvanostat as in Example 6 were used. An oxygen gas was bubbled for 30 minutes or more before measurement. While stirring an electrolyte aqueous solution, the oxygen gas was flowed on its surface during the measurement of ORR current. As for the measurement, a sample electrode (i.e. a working electrode) was firstly immersed in the solution for 10 minutes. Then, about 4 ml of the electrolyte aqueous solution of sulfuric acid in the cell was taken out. Subsequently, a potential cycle was provided 50 times between 0.05 V and 1.0 V (vs RHE), at a sweep speed of 100 mV/second, then, about 4 ml of the electrolyte aqueous solution of sulfuric acid was taken out, and such a operation was carried out up to 150 cycles. Each of the solutions which were taken out was analyzed by an ICP method to measure the concentration of dissolved metal ions. The result is shown in Fig. 16. The elution rate is defined as (the amount of dissolved Pd measured by ICP)/(the total amount of Pd).

As shown in Fig. 16, the elution rates of alloy F and the Pd film were more than 40% and 20%, respectively, but the palladium elution rate of alloy E was less than 3%.

Example 9

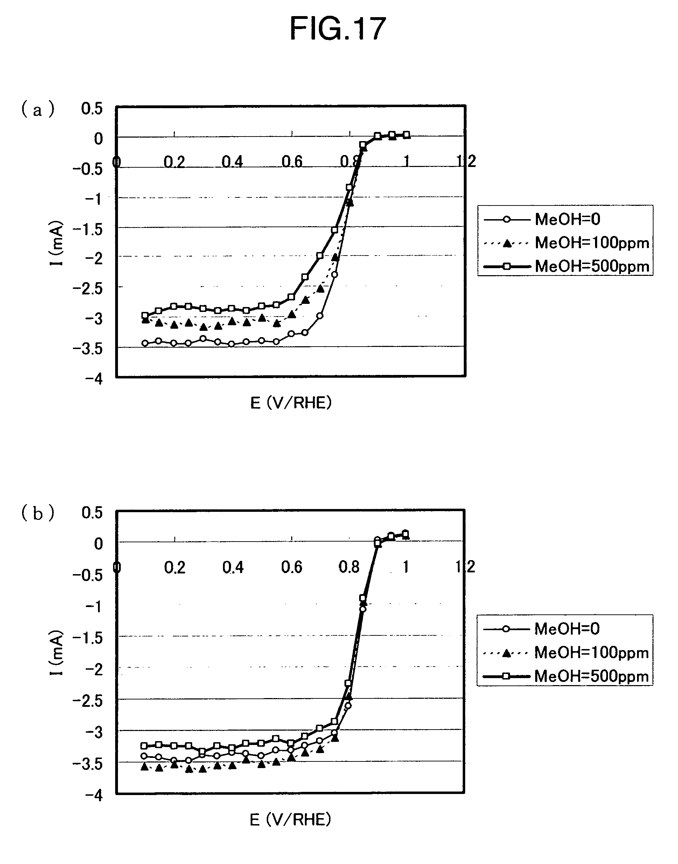

The films of Pt and $Pd_{0.42}Co_{0.48}Au_{0.1}$ (alloy G) ere formed on a glassy carbon plate by the same sputtering method as in Example 6. The ORR current in the steady state was measured by the same method as in Example 6. Then, methanol was dripped in the electrolyte aqueous solution of sulfuric acid of the half cell and stirred. Subsequently, the ORR current in the steady state was measured. The results when the Pt film and the film of alloy G were used are shown in Fig. 17 (a) and Fig. 17(b), respectively. The effect of methanol on ORR current was suppressed in the case of the ternary alloy, but decreased in proportion to the methanol concentration in the case of Pt. In other words, it is seen that when these catalysts are directly used for methanol fuel cell, alloy G is less easily affected by methanol crossover.

Next, in Examples 10 to 13, a powder of a supported catalyst in which the fine particles of an alloy were supported on a carbon powder support was adhered to a carbon rod to manufacture an electrode, and the performance evaluation when this electrode is used as a working electrode was performed.

The measurement methods used in these examples and comparative examples are as follows.

The powder X-ray diffraction (XRD) was performed using RINT-2500 (manufactured by Rigaku) under measurement conditions of source: CuKα rays, scan axis: 2θ/θ, step interval: 0.01°, scan speed: 0.5°/min, acceleration voltage: 40 kV, and acceleration current: 200 mA. As for the slits used in the measurement, the divergence slit was 1°, the scatter slit was 1°, and the receiving slit was 0.15 mm. A graphite monochromator was mounted in front of a detector.

As for X-ray fluorescence analysis (XRF), a measurement sample was molded into a tablet using Al ring of 5-mm Φ for measurement, and XRF all-element qualitative and semiquantitative analysis was performed. In XRF analysis, the analysis diameter was 3 mm Φ, and ZSX-100e (manufactured by Rigaku) was used.

In the inductively coupled plasma emission spectrometry (ICP emission spectrometry), carbon was turned into a $CO_2$ gas and removed by firing in air at 500°C for 5 to 6 hours using a firing furnace, then, the residue was dissolved in aqua regia with heating, and, each metal element in the solution was quantified by a calibration curve method using IRIS Intrepid-II (manufactured by Thermo Electron).

An electrochemical test was performed using a potentiogalvanostat: Solartron 1255WB or 1280Z (both manufactured by Solartron, the U.K.). The details of measurement conditions and the like are described in the examples and comparative examples.

Example 10

1.0 g of Ketjen Black (registered trademark) EC (manufactured by Ketjen Black International Company, surface area: 800 $m^2$/g, primary particle diameter: 39.5 nm), which was a fine particle of carbon, was added to 179.8 g of the solution in which the aqueous solution of 5 weight % palladium (II) chloride hydrochloric acid (manufactured by Aldrich) was diluted to 0.1 weight %, and the dispersion was performed by an ultrasonic homogenizer for about 10 minutes.

In the dispersion obtained by the above dispersion, Hydrazine · monohydrate (manufactured by Wako Pure Chemical Industries, Ltd.) was diluted to 0.05 weight %, and this dilute solution was dripped for about 2 hours so that the pH of the dispersion was 7. After dripping, the dispersion was stirred at room temperature for about 1 hour, and then, the intended material was taken out by suction filtration, washed with purified water, and then washed with ethanol. The obtained powder was dried in air at 80°C for about 8 hours to obtain support material of Pd (Pd/C). The identification of the catalyst was performed by XRD.

Subsequently, 0.332 g of $Co(NO_3)_2 · 6H_2O$ (manufactured by Wako Pure Chemical Industries, Ltd.) was dissolved in 100 ml of purified water, Pd/C obtained by the above was added thereto, and the dispersion was performed by the ultrasonic homogenizer for about 10 minutes. While heating the above dispersion at about 60°C using an evaporator, the purified water of the solvent was removed, then, firing was performed in a 10% hydrogen-containing argon gas flow at 300°C for 2 hours, and then firing was performed in a nitrogen gas flow at 600°C for 5 hours to obtain a support material of PdCo alloy (PdCo/C).

Subsequently, 0.431 g of a chloroauric acid hydrochloric acid aqueous solution (gold content: 17 weight %) (manufactured by Aldrich) was dissolved in 100 ml of purified water, PdCo/C obtained by the above was added thereto, and the dispersion was performed by the ultrasonic homogenizer for about 10 minutes. While heating the above dispersion at about 60°C using the evaporator, the purified water of the solvent was removed, and then, firing was performed in a nitrogen gas flow at 600°C for 5 hours to obtain the support material of PdCoAu alloy (PdCoAu/C).

It was confirmed by XRD that simple substances of Pd, Co, and Au metals did not exist and that they were alloyed. Particularly, as for the Pd (111) peak, the diffraction peak shifted to a wide angle due to alloying. A molar ratio of each element, Pd:Co:Au = 0.38:0.45:0.17, was calculated by XRF measurement.

The electrochemical property of PdCoAu/C obtained by the above methods was evaluated by the following method. Firstly, ethanol aqueous solution of 50 weight % was added to 10 mg of a powder of a supported catalyst to be prepared in 10 g, which was dispersed by applying ultrasonic waves to obtain a 0.1% catalyst suspension. 15 $\mu$l of this catalyst suspension was taken, dripped on a mirror-polished glassy carbon electrode (diameter: 6 mm), and dried in a dryer at 50°C. Next, 10 $\mu$l of a conductive resin solution (Aciplex, a registered trademark of Asahi Kasei Chemicals, a 0.15%-content ethanol solution) was dripped, and dried in a nitrogen atmosphere at 120°C for 2 hours for immobilization to manufacture a PdCoAu/C test electrode.

Next, as for the obtained PdCoAu/C test electrode, an electrochemical test was performed by the following method in a 0.5 M sulfuric acid aqueous solution at 80°C using a 3-electrode electrochemical cell. Hereinafter, potential is shown by potential with respect to a hydrogen electrode (RHE) in the 0.5 M sulfuric acid.

An oxygen gas was bubbled in the sulfuric acid aqueous solution for about 30 minutes to provide oxygen saturation as the atmosphere in the cell, and then, potential scan (potential scan range: 0.05 to 1.0 V, scan speed: 100 mV/s) was performed 150 times. The above operation was performed under the severe conditions that a potential cycle was provided 150 times, with strong acid, at 80°C, in oxygen saturation, and it can be said that the activity of the catalyst after the above operation reflects its durability. Next, the potential was held at 1.0 V for 15 seconds, and then, the potential was changed from 1.0 V to 0.30 V at an interval of 0.05 V to measure the value of oxygen reduction current (the hold time for each potential was 60 seconds, and the value of current for each potential was the average value for 40 seconds after 20 seconds within the hold time).

The potential at which the value of oxygen reduction current was more than 0.01 mA (corresponding to the value of oxygen reduction current per 1 g of palladium on the electrode being 8.7 A/g) was 0.645 V.

Example 11

The support material of PdCoAu alloy (PdCoAu/C) was obtained by performing the operation in the same way as Example 10, except that the solution in which the hydrochloric acid aqueous solution of palladium (II) chloride of 5 weight % (manufactured by Aldrich) was diluted to 0.1 weight % was 217.7 g, $Co(NO_3)_2 \cdot 6H_2O$ (manufactured by Wako Pure Chemical Industries, Ltd.) was 0.226 g, and the hydrochloric acid aqueous solution of chloroauric acid (gold content: 17 weight %) (manufactured by Aldrich) was 0.372 g, in Example 10.

It was confirmed by XRD that simple substances of Pd, Co, and Au metals did not exist and that they were alloyed. Particularly, the diffraction peak of Pd (111) shifted to a wide angle due to alloying. A molar ratio of each element, Pd: Co:Au = 0.51:0.33:0.16, was calculated by XRF measurement.

When the electrochemical property of PdCoAu/C obtained by the above operation was evaluated in the same way as Example 1, the potential when the value of oxygen reduction current was more than 0.01 mA (corresponding to the value of oxygen reduction current per 1 g of palladium on the electrode being 8.7 A/g) was 0.757 V.

As Comparative Example 11-1, a support material of PdCoAu alloy (PdCoAu/C) (Pd:Co:Au = 0.36:0.47:0.17) was manufactured as follows, and the catalyst activity was evaluated.

Firstly, the support material of Pd (Pd/C) was obtained by performing the operation in the same way as Example 10. The identification of the catalyst was performed by XRD. Subsequently, 0.332 g of $Co(NO_3)_2 \cdot 6H_2O$ (manufactured by Wako Pure Chemical Industries, Ltd.) and 0.431 g of the hydrochloric acid aqueous solution of chloroauric acid (gold content: 17 mass %) (manufactured by Aldrich) were dissolved in 100 ml of purified water, Pd/C obtained by the above operation was added thereto, and the dispersion was performed by the ultrasonic homogenizer for about 10 minutes. While heating the dispersion obtained by the above dispersion at about 60°C using the evaporator, the purified water of the solvent was removed, then, firing was performed in a 10% hydrogen-containing argon gas flow at 300°C for 2 hours, and then firing was performed in a nitrogen gas flow at 600°C for 5 hours to obtain the support material of PdCoAu alloy (PdCoAu/C).

It was confirmed by XRD that simple substances of Pd, Co, and Au metals did not exist and that they were alloyed. Particularly, the diffraction peak of Pd (111) shifted to a wide angle due to alloying. A molar ratio of each element, Pd:

Co:Au = 0.36:0.47:0.17, was calculated by XRF measurement.

When the electrochemical property of the PdCoAu/C obtained as described above was evaluated in the same way as Example 10, the potential when the value of oxygen reduction current was more than 0.01 mA (corresponding to the value of oxygen reduction current per 1 g of palladium on the electrode being 8.7 A/g) was 0.511 V.

As Comparative Example 11-2, a support material of PdCoAu alloy (PdCoAu/C) (Pd:Co:Au = 0.38:0.42:0.20) was manufactured as follows, and the catalyst activity was evaluated.

0.288 g of $(NH_4)$ $[PdCl_4]$ (manufactured by Wako Pure Chemical Industries, Ltd.) and 0.332 g of $Co(NO_3)_2 \cdot 6H_2O$ (manufactured by Wako Pure Chemical Industries, Ltd.) were dissolved in 100 ml of purified water, 1.0 g of Ketjen Black (registered trademark) EC (manufactured by Ketjen Black International Company, surface area: 800 $m^2/g$, primary particle diameter: 39.5 nm), which was fine particles of carbon, was added thereto, and the dispersion was performed by the ultrasonic homogenizer for about 10 minutes. While heating the above dispersion at about 60°C using the evaporator, the purified water of the solvent was removed, then, firing was performed in a 10% hydrogen-containing argon gas flow at 300°C for 2 hours, and then firing was performed in a nitrogen gas flow at 600°C for 5 hours to obtain the support material of PdCo alloy (PdCo/C).

Subsequently, 0.431 g of the hydrochloric acid aqueous solution of chloroauric acid (gold content: 17 mass %) (manufactured by Aldrich) was dissolved in 100 ml of purified water, the PdCo/C obtained as described above was added thereto, and dispersion was performed by the ultrasonic homogenizer for about 10 minutes. While heating the dispersion obtained by the above dispersion at about 60°C using the evaporator, purified water of the solvent was removed, and then, firing was performed in the nitrogen gas flow at 600°C for 5 hours to obtain a support material of PdCoAu alloy (PdCoAu/C).

It was confirmed by XRD that simple substances of Pd, Co, and Au metals did not exist and that they were alloyed. Particularly, the diffraction peak of Pd (111) shifted to a wide angle due to alloying. A molar ratio of each element, Pd: Co:Au = 0.38:0.42:0.20, was calculated by XRF measurement.

When the electrochemical property of PdCoAu/C obtained as described above was evaluated in the same way as Example 10, the potential when the value of oxygen reduction current was more than 0.01 mA (corresponding to the value of oxygen reduction current per 1 g of palladium on the electrode being 8.7 A/g) was 0.548 V.

As Comparative Example 11-3, the support material of PdCoAu alloy (PdCoAu/C) (Pd:Co:Au = 0.46:0.34:0.20) was manufactured as follows, and the catalyst activity was evaluated.

Firstly, the support material of Pd (Pd/C) was obtained in the same way as Example 10. The identification of the catalyst was performed by XRD.

Subsequently, 0.431 g of the hydrochloric acid aqueous solution of chloroauric acid (gold content: 17 mass %) (manufactured by Aldrich) was dissolved in 100 ml of purified water, Pd/C obtained as described above was added thereto, and the dispersion was performed by the ultrasonic homogenizer for about 10 minutes. While heating the above dispersion at about 60°C using the evaporator, purified water of the solvent was removed, and then, firing was performed in a nitrogen gas flow at 600°C for 5 hours to obtain the support material of PdAu alloy (PdAu/C).

Subsequently, 0.332 g of $Co(NO_3)_2 \cdot 6H_2O$ (manufactured by Wako Pure Chemical Industries, Ltd.) was dissolved in 100 ml of purified water, PdAu/C obtained as described above was added thereto, and the dispersion was performed by the ultrasonic homogenizer for about 10 minutes. While heating the above dispersion at about 60°C using the evaporator, purified water of the solvent was removed, then, firing was performed in a 10% hydrogen-containing argon gas flow at 300°C for 2 hours, and then firing was performed in a nitrogen gas flow at 600°C for 5 hours to obtain the support material of PdCoAu alloy (PdCoAu/C).

It was confirmed by XRD that simple substances of Pd, Co, and Au metals did not exist and that they were alloyed. Particularly, the diffraction peak of Pd (111) shifted to a wide angle due to alloying. A molar ratio of each element, Pd: Co:Au = 0.46:0.34:0.20, was calculated by XRF measurement.

When the electrochemical property of PdCoAu/C obtained as described above was evaluated in the same way as Example 10, the potential when the value of oxygen reduction current was more than 0.01 mA (corresponding to the value of oxygen reduction current per 1 g of palladium on the electrode being 8.7 A/g) was 0.575 V.

As for Comparative Example 11-4, when a support material of Pd (Pd/C) was evaluated in the same way as Example 10, the potential when the value of oxygen reduction current was more than 0.01 mA (corresponding to the value of oxygen reduction current per 1 g of palladium on the electrode being 8.7 A/g) was 0.590 V.

Example 10, Example 11, and Comparative Examples 11-1 to 11-4, as described above, are summarized as Table 2, and it is clear that catalysts and manufacturing methods according to the present invention are excellent as a cathode catalyst for a polymer electrolyte fuel cell.

Table (2) is a list of the alloy catalyst compositions and ORR starting potentials of Example 10, Example 11, Comparative Example 11-1, Comparative Example 11-2, Comparative Example 11-3, and Comparative Example 11-4.

EP 1 947 718 A1

[Table 2]

|  | Catalyst | Pd:Co:Au | potential when the value of oxygen reduction current is more than 0.01 mA (the value of oxygen reduction current per 1g of palladium on the electrode corresponds to 8.7 A/g) |
|---|---|---|---|
| Example 10 | PdCoAu/C | 0.38:0.45:0.17 | 0.645V |
| Example 11 | PdCoAu/C | 0.51:0.33:0.16 | 0.757V |
| Comparative Example 11-1 | PdCoAu/C | 0.36:0.47:0.17 | 0.511V |
| Comparative Example 11-2 | PdCoAu/C | 0.38:0.42:0.20 | 0.548V |
| Comparative Example 11-3 | pdCoAu/C | 0.46:0.34:0.20 | 0.575V |
| Comparative Example 11-4 | Pd/C | Pd only | 0.590V |

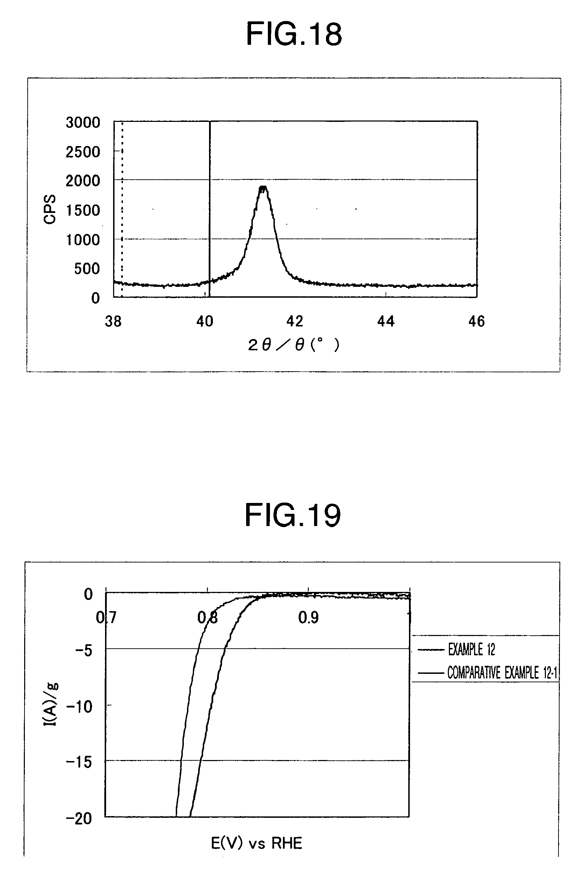

Example 12
A support material of PdCoAu alloy (PdCoAu/C) (Pd:Co:Au = 0.37:0.48:0.15) was manufactured as follows, and the catalyst activity was evaluated.
<Manufacture of Reversed Micelle Solution (A)>
61.7 g of sodium bis(ethylhexyl) sulfosuccinate (AOT) (manufactured by Wako Pure Chemical Industries, Ltd.) was dissolved in 213 ml of heptane (manufactured by Wako Pure Chemical Industries, Ltd.). 0.103 g of $(NH_4)_2[PdCl_6]$ (manufactured by Wako Pure Chemical Industries, Ltd.), 0.0943 g of $Co(NO_3)_2 \cdot 6H_2O$ (manufactured by Wako Pure Chemical Industries, Ltd.), and 0.122 g of a 30 mass % aqueous solution of $HAuCl_4 \cdot nH_2O$ (manufactured by Aldrich) were dissolved in 24.9 g of purified water. The above two types of solutions were mixed, and were subjected to both dispersion by the ultrasonic homogenizer and stirring by a magnetic stirrer for about 20 minutes, in an ice bath, while bubbling nitrogen, to manufacture a reversed micelle solution. After manufacturing, further nitrogen bubbling was provided for about 30 minutes to remove the dissolved oxygen sufficiently.
<Manufacture of Reversed Micelle Solution (B)>
61.7 g of sodium bis(ethylhexyl) sulfosuccinate (AOT) (manufactured by Wako Pure Chemical Industries, Ltd.) was dissolved in 213 ml of heptane (manufactured by Wako Pure Chemical Industries, Ltd.). 1.74 g of $NaBH_4$ (manufactured by Wako Pure Chemical Industries, Ltd.) and 3 g of a 1 mol/l aqueous solution of NaOH (manufactured by Wako Pure Chemical Industries, Ltd.) were prepared, and these were dissolved in 22.1 g of purified water. The above two types of solutions were mixed, and were subjected to both dispersion by the ultrasonic homogenizer and stirring by the magnetic stirrer for about 20 minutes, in an ice bath, while bubbling nitrogen, to manufacture a reversed micelle solution. After manufacturing, further nitrogen bubbling was provided for about 30 minutes to remove the dissolved oxygen sufficiently.
<Manufacture of PdCoAu/C>
The reversed micelle solution (A) and the reversed micelle solution (B) were mixed, and were subjected to the combination of the dispersion by the ultrasonic homogenizer and the stirring by the magnetic stirrer for about 30 minutes at 60°C, while bubbling nitrogen, thereby reacting them. Then, 0.284 g of Ketjen Black (registered trademark) EC (manufactured by Ketjen Black International Company, surface area: 800 $m^2$/g, primary particle diameter: 39.5 nm), which was fine particles of carbon, was added thereto, and the combination of the dispersion by the ultrasonic homogenizer and the stirring by the magnetic stirrer were performed for about 10 minutes under the same conditions as the above description. Further, stirring by the magnetic stirrer was performed for about 1.5 hours at room temperature, and then, the intended material was taken out by suction filtration. It was washed sufficiently with purified water and acetone, and then dried in a desiccator.
Next, firing was performed in a 10% hydrogen-containing argon gas flow at 900°C for 1 hour to obtain the support material of PdCoAu alloy (PdCoAu/C).
By XRD, it was confirmed that simple substances of Pd, Co, and Au metals did not exist and that they were alloyed, and it was found that the PdCoAu ternary alloy was a single phase. Particularly, the Pd (111) peak was $2\theta = 41.24°$, and the diffraction peak shifted to a wide angle due to alloying (see Fig. 18).
A molar ratio of each element, Pd:Co:Au = 0.37:0.48:0.15, was calculated by ICP emission spectrometry.
The electrochemical property of PdCoAu/C obtained as described above was evaluated by the following method. Firstly, the ethanol aqueous solution of 50 weight % was added to 10 mg of a powder of a supported catalyst to be prepared in 10 g, which was dispersed by applying ultrasonic waves to obtain a 0.1% catalyst suspension. 15 $\mu$l of this catalyst suspension was taken out, dripped on a mirror-polished glassy carbon electrode (diameter: 6 mm), and dried in a dryer at 50°C. Next, 10 $\mu$l of a conductive resin solution (Aciplex, a registered trademark of Asahi Kasei Chemicals, a 0.15%-content ethanol solution) was dripped, and dried in a nitrogen atmosphere at 120°C for 2 hours for immobilization to manufacture a PdCoAu/C test electrode.

Next, for the obtained PdCoAu/C test electrode, an electrochemical test was performed by the following method in the sulfuric acid aqueous solution of 0.5 M at 25°C using a 3-electrode electrochemical cell. Hereinafter, potential is shown by potential with respect to a hydrogen electrode (RHE) in the 0.5 M sulfuric acid.

Firstly, nitrogen gas was bubbled in the sulfuric acid aqueous solution for 30 minutes to remove the dissolved oxygen, and potential scan (potential scan range: 0.05 to 1.0 V, scan speed: 200 mV/s) was performed 100 times to clean the surface of the test electrode. Next, the potential was held at 1.0 V for 15 seconds, then, the potential was swept from 1.0 V to 0.3 V at a speed of 5 mV/s, and the value of current was measured. Next, an oxygen gas was bubbled for 30 minutes to provide oxygen saturation in the atmosphere in the cell, and then, the value of oxygen reduction current was measured according to similar potential scan. The result is shown in Fig. 19.

The potential when the difference between the value of oxygen reduction current and the value of current in the nitrogen atmosphere per 1 g of palladium on the electrode was more than 5 A/g was 0.818 V.

Comparative Example 12-1

As a comparative example, the support material of Pd (Pd/C) was manufactured as follows, and the catalyst activity was evaluated.

1.15 g of Ketjen Black (registered trademark) EC (manufactured by Ketjen Black International Company, surface area: 800 $m^2$/g, primary particle diameter: 39.5 nm), which was fine particles of carbon, was added to 179.8 g of a solution in which the hydrochloric acid aqueous solution of 5 weight % of palladium (II) chloride (manufactured by Aldrich) was diluted to 0.1 weight %, and the dispersion was performed by the ultrasonic homogenizer for about 10 minutes. The solution in which Hydrazine · monohydrate (manufactured by Wako Pure Chemical Industries, Ltd.) was diluted to 0.05 weight % was dripped into the above dispersion for about 2 hours so that the pH of the dispersion was 7. After dripping, the dispersion was stirred at room temperature for about 1 hour, and then, the intended material was taken out by suction filtration, and washed with purified water and ethanol. The obtained powder was dried in air at 80°C for about 8 hours to obtain a support material of Pd (Pd/C). The identification of the catalyst was performed by XRD.

The electrochemical property of Pd/C obtained by the above was evaluated in the same way as Example 12. The result is shown in Fig. 19 in the same way. The potential when the difference between the value of oxygen reduction current and the value of current in the nitrogen atmosphere per 1 g of palladium on the electrode was more than 5 A/g was 0.791 V.

Comparative Example 12-2

The operation in the same way as Example 12 was performed, except that the amount of $NaBH_4$ was 0.174 g in the manufacture of the PdCoAu/C of Example 12.

When the molar ratio of each element was measured by ICP emission spectrometry, Pd:Co:Au = 0.47:0.40:0.13 was obtained, and the amount of Co was less than the feed amount, so that an alloy having the intended composition was not obtained.

Example 13

The support material of PdCoAuTi alloy (PdCoAuTi/C) (Pd:Co:Au:Ti = 0.29:0.38:0.12:0.21) was manufactured as follows, and the catalyst activity was evaluated.

<Manufacture of Reversed Micelle Solution (A) >

The solution was manufactured by performing the operation in the same way as Example 12, except that the amount of sodium bis(ethylhexyl) sulfosuccinate (AOT) (manufactured by Wako Pure Chemical Industries, Ltd.) was 46.3 g.

<Manufacture of Reversed Micelle Solution (B)>

The solution was manufactured by performing the operation in the same way as Example 12.

<Manufacture of PdCoAuTi/C>

The reversed micelle solution (A) was mixed with the reversed micelle solution (B), then, 0.0408 g of $Ti(OC_3H_7)_4$ (manufactured by Wako Pure Chemical Industries, Ltd.) was added thereto, and 8.35 g of purified water was further added thereto. The combination of the dispersion by the ultrasonic homogenizer and the stirring by the magnetic stirrer were performed for about 30 minutes at 50°C, while bubbling nitrogen, thereby reacting them. Then, the operation was performed in the same way as Example 1 to obtain the support material of PdCoAuTi alloy (PdCoAuTi/C).

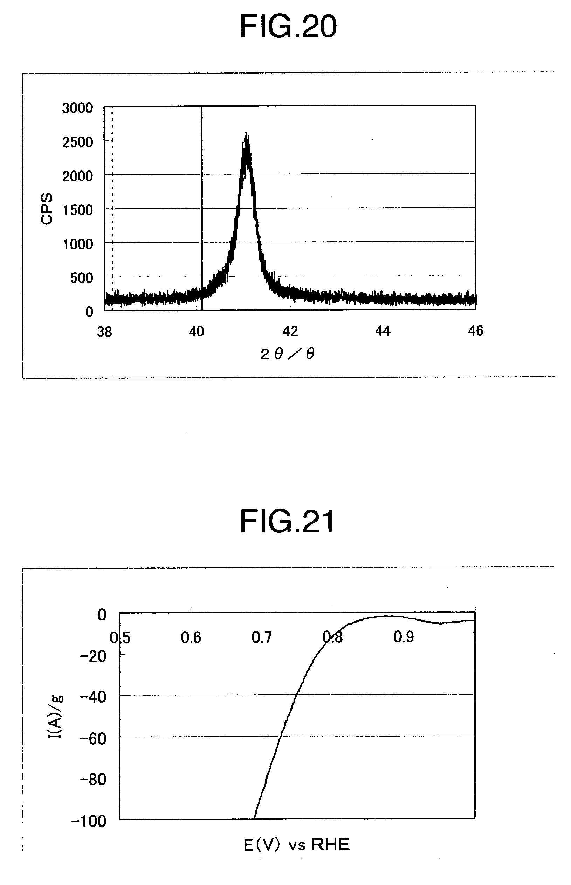

By XRD, it was confirmed that simple substances of Pd, Co, Au, and Ti metals did not exist and that they were alloyed, and it was found that the PdCoAuTi quaternary alloy was a single phase. Particularly, the Pd (111) peak was 2θ = 41.14°, and the diffraction peak shifted to a wide angle due to alloying (see Fig. 20).

A molar ratio of each element, Pd:Co:Au:Ti = 0.29:0.38:0.12:0.21, was calculated by ICP emission spectrometry.

The electrochemical property of PdCoAuTi/C obtained as described above was evaluated by the following method.

Firstly, the purified water was added to 10 mg of a powder of a supported catalyst to be prepared in 10 g, which was dispersed by applying ultrasonic waves to obtain the 0.1% catalyst suspension. 5 μl of this catalyst suspension was taken, dripped on a mirror-polished glassy carbon electrode (diameter: 6 mm), and dried in a dryer at 50°C. This operation was repeated 3 times in total, and 15 μl of the catalyst suspension was taken out and put on the electrode.

Next, 5 μl of a conductive resin solution (Aciplex, a registered trademark of Asahi Kasei Chemicals, a 0.15%-content ethanol solution) was dripped, and dried at 50°C for several hours for immobilization to manufacture a PdCoAuTi/C test electrode.

Next, as for the obtained PdCoAuTi/C test electrode, an electrochemical test according to a rotating electrode method was performed by the following method in the sulfuric acid aqueous solution of 0.5 M at 60°C using a 3-electrode electrochemical cell. Hereinafter, potential is shown by potential with respect to a hydrogen electrode (RHE) in the 0.5 M sulfuric acid.

Firstly, nitrogen gas was bubbled in the sulfuric acid aqueous solution for 30 minutes to remove the dissolved oxygen, and potential scan (potential scan range: 0.05 to 1.0 V, scan speed: 200 mV/s) was performed 100 times to clean the surface of the test electrode. Next, the number of revolutions was set at 2000 r/m, the potential was held at 1.0 V for 15 seconds, then, the potential was swept from 1.0 V to 0.3 V at a speed of 5 mV/s, and the value of current was measured. Next, an oxygen gas was bubbled for 30 minutes to provide oxygen saturation in the atmosphere in the cell, then, the number of revolutions was set at the same 2000 r/m, and the value of oxygen reduction current was measured according to the above potential scan. The result is shown in Fig. 21.

The potential when the difference between the value of oxygen reduction current and the value of current in the nitrogen atmosphere per 1 g of palladium on the electrode was more than 10 A/g was 0.806 V.

Example 14

A support material of PdCoAuNi alloy (PdCoAuNi/C) (Pd:Co:Au:Ni = 0.33:0.38:0.13:0.16) was manufactured as follows, and the catalyst activity was evaluated.

<Manufacture of Reversed Micelle Solution (A)>

46.3 g of sodium bis(ethylhexyl) sulfosuccinate (AOT) (manufactured by Wako Pure Chemical Industries, Ltd.) was dissolved in 213 ml of heptane (manufactured by Wako Pure Chemical Industries, Ltd.). 0.103 g of $(NH_4)_2[PdCl_6]$ (manufactured by Wako Pure Chemical Industries, Ltd.), 0.0943 g of $Co(NO_3)2 \cdot 6H_2O$ (manufactured by Wako Pure Chemical Industries, Ltd.), 0.122 g of a 30 weight % aqueous solution of $HAuCl_4.nH_2O$ (manufactured by Aldrich), and 0.034 g of $NiCl_2 \cdot 2H_2O$ (manufactured by Wako Pure Chemical Industries, Ltd.) were prepared, and these were dissolved in 24.9 g of purified water. The above two types of solutions were mixed, and were subjected to the combination of the dispersion by the ultrasonic homogenizer the and stirring by the magnetic stirrer for about 20 minutes, in an ice bath, while bubbling nitrogen, to manufacture a reversed micelle solution. After manufacturing, further nitrogen bubbling was performed for about 30 minutes to remove the dissolved oxygen sufficiently.

<Manufacture of Reversed Micelle Solution (B)>

61.7 g of sodium bis(ethylhexyl) sulfosuccinate (AOT) (manufactured by Wako Pure Chemical Industries, Ltd.) was dissolved in 213 ml of heptane (manufactured by Wako Pure Chemical Industries, Ltd.). 1.74 g of $NaBH_4$ (manufactured by Wako Pure Chemical Industries, Ltd.) and 1 g of a 1 mol/l aqueous solution of NaOH (manufactured by Wako Pure Chemical Industries, Ltd.) were dissolved in 24.0 g of purified water. The above two types of solutions were mixed, and were subjected to the combination of the dispersion by the ultrasonic homogenizer and the stirring by the magnetic stirrer for about 20 minutes, in an ice bath, while bubbling nitrogen, to manufacture a reversed micelle solution. After manufacturing, further nitrogen bubbling was provided for about 30 minutes to remove the dissolved oxygen sufficiently.

<Manufacture of PdCoAuNi/C>

The reversed micelle solution (A) was mixed with the reversed micelle solution (B), 12 ml of distilled water was further added thereto, and the combination of the dispersion by the ultrasonic homogenizer and the stirring by the magnetic stirrer were performed for about 30 minutes at 60°C, while bubbling nitrogen, for reaction. Then, 0.284 g of Ketjen Black (registered trademark) EC (manufactured by Ketjen Black International Company, surface area: 800 $m^2$/g, primary particle diameter: 39.5 nm), which was fine particles of carbon, was added thereto, and the combination of the dispersion by the ultrasonic homogenizer and the stirring by the magnetic stirrer were performed for about 10 minutes under the same conditions as the above description. Further, the stirring by the magnetic stirrer was performed for about 1.0 hour at room temperature, and then, the intended material was taken out by suction filtration. It was washed sufficiently with purified water and acetone, and then dried in a desiccator.

Next, firing was performed in a 10% hydrogen-containing argon gas flow at 900°C for 1 hour to obtain the support material of PdCoAuNi alloy (PdCoAuNi/C).

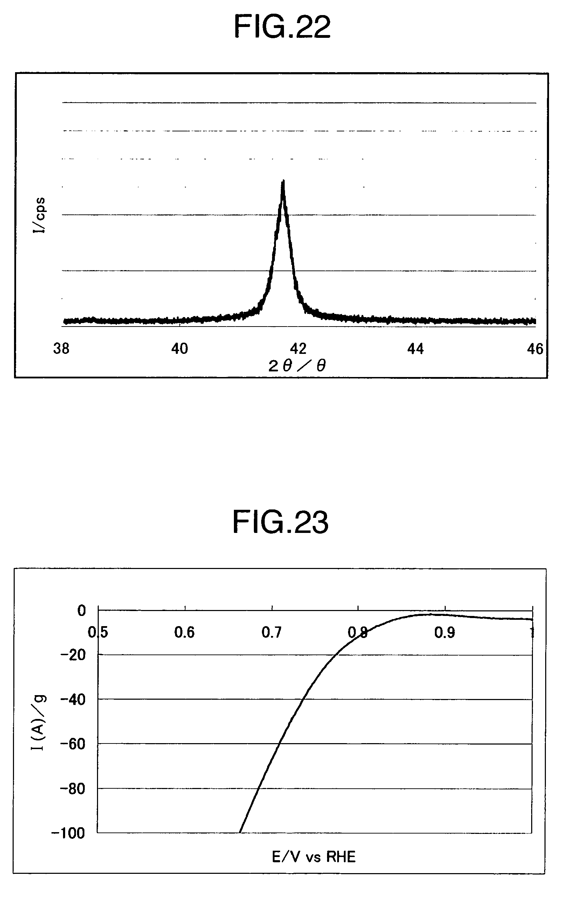

By XRD, it was confirmed that simple substances of Pd, Co, Au, and Ni metals did not exist and that they were alloyed, and it was found that the PdCoAuNi quaternary alloy was a single phase. Particularly, the Pd (111) peak was $2\theta = 41.73°$, and the diffraction peak shifted to a high angle due to alloying (see Fig. 22).

The electrochemical property of PdCoAuNi/C obtained as described above was evaluated by the following method. Firstly, the purified water was added to 10 mg of a powder of a supported catalyst to be prepared in 10 g, which was dispersed by applying ultrasonic waves to obtain a 0.1% catalyst suspension. 5 μl of this catalyst suspension was taken out, dripped on a mirror-polished glassy carbon electrode (diameter: 6 mm), and dried in a dryer at 50°C. This operation was repeated 3 times in total, and 15 μl of the catalyst suspension was taken out and put on the electrode.

Next, 5 μl of a conductive resin solution (Aciplex, a registered trademark of Asahi Kasei Chemicals, a 0.15%-content ethanol solution) was dripped, and dried at 50°C for several hours for immobilization to manufacture a PdCoAuNi/C test electrode.

Next, as for the obtained PdCoAuNi/C test electrode, an electrochemical test according to a rotating electrode method was performed by the following method in the sulfuric acid aqueous solution of 0.5 M at 60°C using a 3-electrode electrochemical cell. Hereinafter, potential is shown by potential with respect to a hydrogen electrode (RHE) in the 0.5 M sulfuric acid.

Firstly, nitrogen gas was bubbled in the sulfuric acid aqueous solution for 30 minutes to remove the dissolved oxygen, and potential scan (potential scan range: 0.05 to 1.0 V, scan speed: 200 mV/s) was performed 100 times to clean the surface of the test electrode. Next, the number of revolutions was set at 2000 r/m, the potential was held at 1.0 V for 15 seconds, then, the potential was swept from 1.0 V to 0.3 V at a speed of 5 mV/s, and the value of current was measured.

Next, an oxygen gas was bubbled for 30 minutes to provide oxygen saturation in the atmosphere in the cell, then, the number of revolutions was set at the same 2000 r/m, and the value of oxygen reduction current was measured according to the above potential scan. The result is shown in Fig. 23.

The potential when the difference between the value of oxygen reduction current and the value of current in the nitrogen atmosphere per 1 g of palladium on the electrode was more than 10 A/g was 0.808 V.

Example 15

The support material of PdCoAuFe alloy (PdCoAuFe/C) (Pd:Co:Au:Fe = 0.33:0.38:0.13:0.16) was manufactured as follows, and the catalyst activity was evaluated.

<Manufacture of Reversed Micelle Solution (A)>

46.3 g of sodium bis(ethylhexyl) sulfosuccinate (AOT) (manufactured by Wako Pure Chemical Industries, Ltd.) was dissolved in 213 ml of heptane (manufactured by Wako Pure Chemical Industries, Ltd.). 0.103 g of $(NH_4)_2[PdCl_6]$ (manufactured by Wako Pure Chemical Industries, Ltd.), 0.0943 g of $Co(NO_3)_2 \cdot 6H_2O$ (manufactured by Wako Pure Chemical Industries, Ltd.), 0.122 g of a 30 weight % aqueous solution of $HAuCl_4 \cdot nH_2O$ (manufactured by Aldrich), and 0.058 g of $Fe(NO_3)_3 \cdot 9H_2O$ (manufactured by Wako Pure Chemical Industries, Ltd.) were dissolved in 24.9 g of purified water. The above two types of solutions were mixed, and were subjected to the combination of the dispersion by the ultrasonic homogenizer and the stirring by the magnetic stirrer for about 20 minutes, in an ice bath, while bubbling nitrogen, to manufacture a reversed micelle solution. After manufacturing, further nitrogen bubbling was performed for about 30 minutes to remove the dissolved oxygen sufficiently.

<Manufacture of Reversed Micelle Solution (B)>

A solution was manufactured by performing the operation in the same way as Example 14.

<Manufacture of PdCoAuFe/C>

The reversed micelle solution (A) was mixed with the reversed micelle solution (B), 12 ml of distilled water was further added thereto, and the combination of the dispersion by the ultrasonic homogenizer and the stirring by the magnetic stirrer were performed for about 30 minutes at 60°C, while bubbling nitrogen, thereby reacting them. Then, with 0.284 g of Ketjen Black (registered trademark) EC (manufactured by Ketjen Black International Company, surface area: 800 $m^2$/g, primary particle diameter: 39.5 nm), which was fine particles of carbon, the combination of the dispersion by the ultrasonic homogenizer and the stirring by the magnetic stirrer were performed for about 10 minutes under the same conditions as the above description. Further, the stirring by the magnetic stirrer was performed for about 1.0 hour at room temperature, and then, the intended material was taken out by suction filtration. It was washed sufficiently with purified water and acetone, and then dried in a desiccator.

Next, firing was performed in a 10% hydrogen-containing argon gas flow at 900°C for 1 hour to obtain the support material of PdCoAuFe alloy (PdCoAuFe/C).

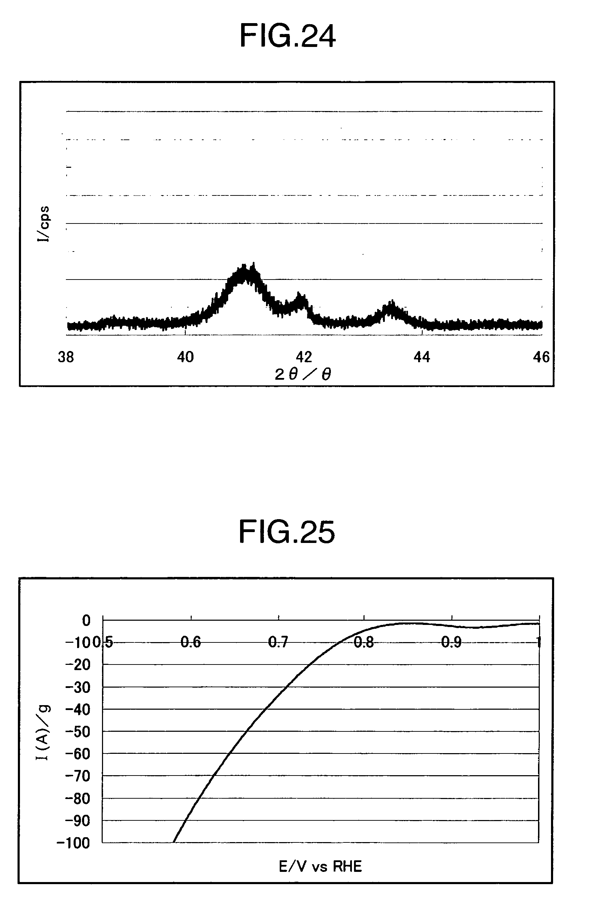

By XRD, it was confirmed that simple substances of Pd, Co, Au, and Fe metals did not exist and that they were alloyed. Particularly, the Pd (111) peak was $2\theta = 41.06°$, and the diffraction peak shifted to a high angle due to alloying (see Fig. 24).

The electrochemical property of PdCoAuFe/C obtained as described above was evaluated by the following method.

Firstly, the purified water was added to 10 mg of a powder of a supported catalyst to be prepared in 10 g, which was dispersed by applying ultrasonic waves to obtain the 0.1% catalyst suspension. 5 $\mu$l of this catalyst suspension was taken out, dripped on a mirror-polished glassy carbon electrode (diameter: 6 mm), and dried in a dryer at 50°C. This operation was repeated 3 times in total, and 15 $\mu$l of the catalyst suspension was taken out and put on the electrode. Next, 5 $\mu$l of a conductive resin solution (Aciplex, a registered trademark of Asahi Kasei Chemicals, a 0.15%-content ethanol solution) was dripped, and dried at 50°C for several hours for immobilization to manufacture a PdCoAuFe/C test electrode.

Next, as for the obtained PdCoAuFe/C test electrode, the electrochemical test according to a rotating electrode method was performed by the following method in the sulfuric acid aqueous solution of 0.5 M at 60°C using a 3-electrode electrochemical cell. Hereinafter, the potential is shown by potential with respect to a hydrogen electrode (RHE) in the 0.5 M sulfuric acid.

Firstly, a nitrogen gas was bubbled in the sulfuric acid aqueous solution for 30 minutes to remove the dissolved oxygen, and potential scan (potential scan range: 0.05 to 1.0 V, scan speed: 200 mV/s) was performed 100 times to clean the surface of the test electrode. Next, the number of revolutions was set at 2000 r/m, the potential was held at 1.0 V for 15 seconds, then, the potential was swept from 1.0 V to 0.3 V at a speed of 5 mV/s, and the value of current was measured. Next, an oxygen gas was bubbled for 30 minutes to provide oxygen saturation in the atmosphere in the cell, then, the number of revolutions was set at the same 2000 r/m, and the value of oxygen reduction current was measured according to the above potential scan. The result is shown in Fig. 25.

The potential when the difference between the value of oxygen reduction current and the value of current in the nitrogen atmosphere per 1 g of palladium on the electrode was more than 10 A/g was 0.770 V.

INDUSTRIAL APPLICABILITY

The present invention provides a cathode catalyst for a polymer electrolyte fuel cell that is at low cost and is not restricted by reserves by not using platinum and that has oxygen reduction performance and excellent performance in durability, and can be used for fuel cells for automobiles, fuel cells for home use, and fuel cells for portable equipment.

**Claims**

1. An alloy catalyst for oxygen reduction reaction in a polymer electrolyte membrane fuel cell, comprising at least Pd, Co, and Au, wherein each content of Pd, Co, and Au satisfies 20 atomic % $\leqq$ Pd < 70 atomic %, 30 atomic % $\leqq$ Co < 70 atomic %, and 0 atomic % < Au $\leqq$ 30 atomic %.

2. The alloy catalyst according to claim 1,
   wherein said each content of Pd, Co, and Au is on a border curve shown in Fig. 10 or within an area surrounded by the border curve and a Pd-Co axis.

3. A cathode catalyst for a polymer electrolyte fuel cell, wherein said alloy catalyst according to claim 1 or 2 is supported on a support material containing carbon.

4. A bonded membrane/electrode assembly for a polymer electrolyte fuel cell, comprising a proton electrolyte membrane, an anode catalyst layer, and a cathode catalyst layer wherein the cathode catalyst layer comprises said cathode catalyst according to claim 3.

5. A polymer electrolyte fuel cell comprising said bonded membrane/electrode assembly according to claim 4.

6. A method for manufacturing said cathode catalyst for a polymer electrolyte fuel cell according to claim 3, comprising the steps of: step (1) of manufacturing a support material of Pd wherein the Pd is supported on a carbon powder, wherein the support material of Pd is obtained by dispersing the carbon powder in a Pd solution and then dripping a reducing agent; step (2) of manufacturing a support material of PdCo alloy wherein the PdCo alloy is supported on the carbon powder by performing a first firing under an inert gas atmosphere containing a hydrogen gas or a hydrogen gas, and successively performing a second firing under an inert gas atmosphere, wherein the first and second firings are performed using either a support material of PdCo which is obtained by dispersing the support material of Pd in a Co solution and then removing a solvent, or a support material of PdCo which is obtained by dispersing the support material of Pd in a Co solution, dripping a reducing agent or pH adjuster, and then performing filtration; and step (3) of manufacturing a support material of PdCoAu alloy wherein the PdCoAu alloy is supported on the carbon powder by performing a third firing under an inert gas atmosphere, wherein the third firing is performed using either a support material of PdCoAu which is obtained by dispersing the support material of PdCo alloy in an Au solution and then removing a solvent, or a support material of PdCoAu which is obtained by dispersing the support material of PdCo alloy in an Au solution, dripping a reducing agent, and performing filtration.

7. A method for manufacturing said cathode catalyst for a polymer electrolyte fuel cell according to claim 3, comprising mixing and stirring a reversed micelle solution (A), in an organic solvent, comprising at least a Pd aqueous solution, a Co aqueous solution, and an Au aqueous solution wherein the Pd, Co, and Au aqueous solutions are within micelles, and a reversed micelle solution (B), in an organic solvent, comprising at least 10 equivalents to 150 equivalents of a reducing agent with respect to all metal ions in the reversed micelle solution (A) wherein the reducing agent is within micelles, wherein the mixing and stirring of the reversed micelle solutions (A) and (B) is performed in the state containing the organic solvents so that a pH within reversed micelles after mixing the reversed micelle solutions (A) and (B) is 9 to 13; precipitating simple substances of Pd and Au metals and Co hydroxide; successively, adding a carbon powder to this reaction system and stirring them to obtain a support material of the carbon powder on which the obtained simple substances of Pd and Au metals and Co hydroxide are supported; and subsequently, firing the support material of the carbon powder separated from this reaction system by filtering.

# FIG.1

EP 1 947 718 A1

# FIG.2

# FIG.3

# FIG.4

# FIG.5

I 0.70 V (0)

(a)

I 0.75 V (1)

(b)

I 0.80 V (2)

(c)

# FIG.6

**J(ECA) 0.70 V (0)**

( a )

**J(ECA) 0.75 V (1)**

( b )

**J(ECA) 0.80 V (2)**

( c )

# FIG.7

(a)

(b)

(c)

# FIG.8

( a )

( b )

( c )

# FIG.9

(a)

(BEFORE - AFTER)

(b)

(BEFORE - AFTER)

# FIG.10

ATOMIC % Co

ATOMIC %
Pd

ATOMIC %
Au

# FIG.11

(a)          (b)

# FIG.12

# FIG.13

EP 1 947 718 A1

# FIG.14

EP 1 947 718 A1

# FIG.15

EP 1 947 718 A1

# FIG.16

EP 1 947 718 A1

# FIG.17

(a)

(b)

# FIG.18

# FIG.19

# FIG.20

# FIG.21

# FIG.22

# FIG.23

## FIG.24

## FIG.25

**EP 1 947 718 A1**

## INTERNATIONAL SEARCH REPORT

| International application No. |
|---|
| PCT/JP2006/319982 |

A. CLASSIFICATION OF SUBJECT MATTER
*H01M4/90*(2006.01)i, *B01J23/89*(2006.01)i, *B01J37/02*(2006.01)i, *B01J37/16*(2006.01)i, *C22C5/04*(2006.01)i, *C22C19/07*(2006.01)i, *H01M4/88*(2006.01)i

According to International Patent Classification (IPC) or to both national classification and IPC

B. FIELDS SEARCHED

Minimum documentation searched (classification system followed by classification symbols)
H01M4/90, B01J23/89, B01J37/02, B01J37/16, C22C5/04, C22C19/07, H01M4/88

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2006-45614 A  (Dowa Mining Co., Ltd.),<br>16 February, 2006 (16.02.06),<br>Full text<br>& US 2006/27042 A1      & EP 1623780 A1 | 1-5<br>6-7 |
| A | JP 8-66632 A  (Tanaka Kikinzoku Kogyo Kabushiki Kaisha),<br>12 March, 1996 (12.03.96),<br>Full text<br>(Family: none) | 1-7 |
| A | JP 2004-87454 A  (Hitachi Maxell, Ltd.),<br>18 March, 2004 (18.03.04),<br>Full text<br>(Family: none) | 1-7 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>05 January, 2007 (05.01.07) | Date of mailing of the international search report<br>16 January, 2007 (16.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

45

**INTERNATIONAL SEARCH REPORT**

International application No.

PCT/JP2006/319982

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-79438 A (Toshiba Corp.),<br>11 March, 2004 (11.03.04),<br>Full text<br>& US 2004/121219 A1 | 1-7 |
| A | JP 2004-253385 A (Samsung SDI Co., Ltd.),<br>09 September, 2004 (09.09.04),<br>Full text<br>(Family: none) | 1-7 |
| A | JP 2005-5257 A (Nissan Motor Co., Ltd.),<br>06 January, 2005 (06.01.05),<br>Full text<br>(Family: none) | 1-7 |
| A | JP 2005-196972 A (Nissan Motor Co., Ltd.),<br>21 July, 2005 (21.07.05),<br>Full text<br>(Family: none) | 1-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005035820 A

**Non-patent literature cited in the description**

- **O. SAVADOGO et al.** *Electrochemistry Communications,* 2004, vol. 6, 105-109
- **J. L. FERNANDEZ et al.** *Journal of American Chemical Society,* 2005, vol. 127, 357-365
- **J. L. FERNANDEZ et al.** *Journal of American Chemical Society,* 2005, vol. 127, 13100-13101
- **GUERIN et al.** *J. Comb. Chem.,* 2004, vol. 6, 149-158